# EUROPÄISCHE PATENTSCHRIFT

(11) **EP 4 192 724 B1**
(45) Veröffentlichungstag und Bekanntmachung des Hinweises auf die Patenterteilung: **25.11.2026**
(21) Anmeldenummer: 21754805.6
(22) Anmeldetag: 06.08.2021
(51) Int. Cl.: B62K 21/00, B60B 27/02

(54) **FAHRRADARTIGES FAHRZEUG**
BICYCLE-LIKE VEHICLE
VÉHICULE DE TYPE VÉLO

(30) Priorität: 06.08.2020 DE 102020120818; 23.07.2021 WO PCT/EP2021/070691
(43) Veröffentlichungstag der Anmeldung: 14.06.2023
(73) Patentinhaber: Heise, Volker, 42651 Solingen (DE)
(72) Erfinder: Heise, Volker, 42651 Solingen (DE)
(74) Vertreter: Müller, Enno
(86) Internationale Anmeldenummer: PCT/EP2021/072017
(87) Internationale Veröffentlichungsnummer: WO 2022/029296

(56) Entgegenhaltungen:
- EP-A1- 2 628 673
- WO-A1-2005/123493
- WO-A1-2018/057543
- WO-A1-92/12043
- CN-A- 107 554 683
- CN-U- 201 941 913
- GB-A- 2 446 390
- JP-A- 2015 182 763
- JP-A- 2019 077 424
- US-A- 3 984 129
- US-A- 4 045 096
- US-A- 6 000 707

## Beschreibung

### Gebiet der Technik

Die Erfindung betrifft ein fahrradartiges Fahrzeug nach den Merkmalen des Oberbegriffes des Anspruches 1.

### Stand der Technik

Fahrzeuge der in Rede stehenden Art sind in verschiedenen Ausführungen bekannt. Diese werden beispielsweise im Freizeitbereich genutzt, darüber hinaus aber auch zunehmend mehr als Verkehrs- oder Transportmittel, beispielsweise im innerstädtischen Bereich. Als Antrieb ist bei derartigen Fahrzeugen beispielsweise ein Kurbelantrieb bekannt, der unmittelbar oder auch mittelbar beispielsweise über eine Kette oder einen Riemen auf eines der Räder wirkt.

Durch die Anordnung eines Sitzteils, insbesondere einer Sitzausformung mit insbesondere einem Rückenteil, ist eine ergonomisch günstige Sitzposition für den Benutzer des Fahrzeuges möglich.

Ein gegebenenfalls weiter vorgesehener Witterungsschutz kann die Möglichkeit der Nutzung des Fahrzeuges auch beispielsweise bei Regen bieten. So sind diesbezüglich Fahrzeuge bekannt, die einen Witterungsschutz aufweisen, der den Benutzer in Fahrtrichtung von vorne und von oben schützt.

Es wird diesbezüglich beispielsweise auf die DE 43 19 585 A1 verwiesen.

Aus der WO 2005/123493 A1 ist ein Fahrrad bekannt, bei welchem Tretpedale über ein Getriebe auf das Vorderrad zum Antrieb einwirken. Das Vorderrad ist mitsamt der Tretpedale zum Lenken verschwenkbar ausgebildet.

Weiter ist auch aus der EP 2 628 673 A1 ein Fahrrad bekannt, bei welchem mittels Tretpedalen zum Antrieb auf das Vorderrad eingewirkt werden kann. Das Vorderrad ist zusammen mit den Tretpedalen zur Lenkung verschwenkbar.

### Zusammenfassung der Erfindung

Ausgehend von einem Stand der Technik wie er etwa durch die WO 2005/123493 A1 gegeben ist, beschäftigt sich die Erfindung mit der Aufgabenstellung, ein fahrradartiges Fahrzeug der genannten Art in gebrauchstechnisch vorteilhafter Weise auszugestalten.

Diese Aufgabe ist beim Gegenstand des Anspruches 1 gelöst, wobei darauf abgestellt ist, dass die Tretpedale (24) sich in seitlicher Überdeckung zu dem Vorderrad (2) befinden, dass mit Bezug auf eine senkrechte Projektion der Ebenen des lenkbaren Vorderrades und der Tretpedale auf eine Abrollebene, auf welcher sich das Fahrzeug bewegen kann, eine sich in geradliniger Fahrtrichtung ausgerichtete parallele Anordnung der Verlagerungsweg-Ebenen ergibt, dass die Ebenen quer zur Ebenenausrichtung zueinander beabstandet sind und dass die Ebene des Vorderrades sich zwischen diesen Verlagerungsweg-Ebenen erstreckt, bei einem Geradeauslauf etwa mittig zwischen den Verlagerungsweg-Ebenen und gleichgerichtet ausgerichtet zu dieser, wobei bei einer von dem Geradeauslauf abweichenden Lenkstellung die Ebene des Vorderrades einen spitzen Winkel zu den Verlagerungsweg-Ebenen einnimmt.

Es kann ein gabelfester Bügel vorgesehen sein, der das Vorderrad vorderseitig umgreift und nur zerstörend lösbar mit der Gabel verbunden ist, wobei der Bügel eine verriegelbare Öffnung aufweist, zur Sicherung des Fahrzeugs beispielsweise an einem Bodenanker.

Es kann vorgesehen sein, dass ein Stützrad vorgesehen ist, das radial verstellbar vorgesehen ist.

Dadurch, dass das eine oder beide Tretpedale sich in seitlicher Überdeckung zu dem Vorderrad befinden, bewegen sich von der Seite betrachtet die Tretpedale bevorzugt innerhalb der Silhouette des Vorderrades und weiter bevorzugt ausschließlich in dieser Silhouette, wenn man in seitlicher Betrachtung das Vorderrad derart betrachtet, dass eine Drehachse, und sei es eine geometrische Drehachse, sich als Punkt abbilden würde. Weiter bevorzugt sind die Tretpedale durch einen Witterungsschutz untergriffen, sodass von unten beim Fahren kein Spritzwasser hochgeschleudert werden kann.

Zum Offenbarungsgehalt der Anmeldung, beispielsweise auch hinsichtlich des genannten Witterungsschutzes, wird auch auf die DE 10 2020 120 818 A1 Bezug genommen. Die Offenbarung dieser Anmeldung wird vollinhaltlich in die Offenbarung vorliegender Anmeldung mit eingeschlossen, auch um Merkmale der genannten Anmeldung in Ansprüche vorliegender Anmeldung mit aufzunehmen.

Zufolge allein einer der vorgeschlagenen Ausgestaltungen, darüber hinaus aber auch durch jede mögliche Kombination der vorgeschlagenen Ausgestaltungen ist ein günstig handhabbares Fahrzeug angegeben. Das Handling und Fahren auf engen Wegen oder auch das Fahren im Offroadbereich ist hierdurch begünstigt. Zudem ist ein Fahrzeug geschaffen mit einem vorteilhaften Diebstahlschutz.

Es ist in vorteilhafter Weise ein einspuriges Fahrzeug angegeben, bei welchem eine Krafteinleitung über Muskelkraft seitlich (beidseitig) des Vorderrades erfolgt, ohne dass durch diese Krafteinleitung eine Lenkbewegung des Vorderrades mit vollzogen wird und wobei kein störender Einfluss der Krafteinleitung auf das Tretpedal im Hinblick auf eine willensbetonte Lenkbewegung des Vorderrades gegeben ist. Das Fahrzeug hat entsprechend bevorzugt nur zwei Räder, ein Vorderrad und ein Hinterrad, die, wie bei einem üblichen Fahrrad, fluchtend hintereinander angeordnet sind.

In vorteilhafter Weise ist die Lenkung, insbesondere die Lenkung des Vorderrades, unabhängig von der Bedienung des Tretpedals, weiter insbesondere unabhängig von einem Verlagerungsweg des Tretpedals. Der Verlagerungsweg des Tretpedals kann dabei, wie auch bevorzugt, im Wesentlichen gestellfest und unabhängig von der Lenkeinstellung insbesondere des Vorderrades im Wesentlichen in üblicher geradliniger Fahrtrichtung des Fahrzeugs gegeben sein.

Der Verlagerungsweg des Tretpedals ist dabei weiter bevorzugt in einer Ebene gegeben, die bevorzugt unabhängig von der Lenkstellung insbesondere des Vorderrades stets raumparallel zum bevorzugt nicht lenkbaren Hinterrad ausgerichtet sein kann. Hieraus ergibt sich ein ergonomisch günstiger Antrieb auf das Vorderrad in jeder möglichen Lenkstellung desselben. Die die Tretpedale bevorzugt belastenden Beine und Füße des Benutzers müssen nicht die Lenkbewegung des Vorderrades mit vollziehen, verbleiben vielmehr in der ergonomisch günstigen in Fahrtrichtung nach vorne und im Wesentlichen parallel zueinander gerichteten Ausrichtung.

Der Verlagerungsweg der Tretpedale beziehungsweise die Verlagerungswege der Tretpedale können bei mit Bezug zu dem Vorderrad beidseitiger Anordnung in bevorzugter Ausgestaltung einen Lenkeinschlag ausgehend von dem Geradeauslauf zu beiden Seiten hin von bis zu 30 bis 50 Grad, bevorzugt etwa 40 Grad zulassen.

Durch den vorgeschlagenen gabelfesten Bügel ist eine Sicherung des Fahrzeugs gegen Diebstahl ermöglicht. Der Bügel kann dabei, wie auch bevorzugt, auch im üblichen Betrieb des Fahrzeugs im Bereich des Vorderrades vorgesehen und angeordnet sein, sodass dieser Bügel stets zur Sicherung des Fahrzeugs vorliegt.

Der Bügel kann dabei in der Sicherungsstellung sowohl das Vorderrad bevorzugt vorderseitig und einen ortsfesten Anker, beispielsweise einen Bodenanker, umschlingen beziehungsweise durchsetzen. Um diese Sicherungsstellung herzustellen ist der Bügel bevorzugt öffenbar, wobei die sich ergebende Öffnung durch den Benutzer bevorzugt verriegelbar ist.

Die Verriegelung des Bügels beziehungsweise der Bügelöffnung kann in üblicher Weise durch ein vorgesehenes Schloss erfolgen, welches weiter in üblicher Weise beispielsweise mit einen Schlüssel oder über einen Zahlencode ver- und entriegelbar sein kann. Alternativ kann die Schlossfunktion auch gekoppelt sein mit der weiter in dem Fahrzeug gegebenenfalls vorgesehenen Elektronik. Eine etwaige durch die Elektronik erfasste Zugangsberechtigung für das Fahrzeug kann so auch eine Entriegelung des Bügels ermöglichen.

Die Tretpedale sind zugleich Fußaufnahmen für einen das Fahrzeug nutzenden Fahrer. Bevorzugt ergeben sich beidseitig des Vorderrades derartige Fußaufnahmen, in Form von Tretpedalen. Diese Fußaufnahmen sind weiter bevorzugt durch einen Witterungsschutz untergriffen, sodass zusätzlich zu einem Schutz gegen beispielsweise Regen von vorne, durch ein dort vorgesehenes Witterungs-Schutzschild und/oder von oben durch ein Dachteil, beispielsweise auch ein Schutz gegen aufspritzendes Wasser auf regennassen Fahrbahnen, erreicht ist. Insbesondere der Bereich der Fußaufnahme kann so sowohl von vorne als auch von unten witterungsgeschützt sein, darüber hinaus auch seitlich nach außen.

Durch die ermöglichte radiale Verstellbarkeit eines bevorzugt gefederten Stützrades ist weiter ein verbesserter Fahrkomfort erreicht. So kann zufolge der radialen Verstellbarkeit des Stützrades beispielsweise auch bei einer starken Stoßbelastung im Bereich des Rades, insbesondere des Vorderrades, der Kontakt zu der Felge sichergestellt sein. Es kommt bevorzugt nicht zufolge etwaiger Stoßeinwirkung zu einem Kontaktverlust zwischen Stützrad und Felge. Soweit eine Feder vorgesehen ist, kann auch nur eine Verstellbarkeit der Federkraft vorgesehen sein. Die eventuell vorgesehene Feder beziehungsweise die sich hieraus ergebende, auf das Stützrad wirkende Federkraft ist vorteilhaft dahingehend, die Reibkraft zu halten oder zu verstärken. Beispielsweise kann es erforderlich sein, bei feuchten Verhältnissen mit einer gegenüber bei trockenen Verhältnissen stark erhöhten, beispielsweise auf einen zweifachen Wert oder mehr erhöhten Reibkraft zu arbeiten.

Darüber hinaus kann durch die Ermöglichung der radialen Verstellbarkeit des Stützrades gegebenenfalls auch, je nach Betriebszustand des Fahrzeugs, die Kontaktkraft des Stützrades an der Felge geschaltet beziehungsweise geregelt werden, so beispielsweise in einem Rekuperations-Betrieb des Fahrzeugs oder in Zuständen, in welchen das Fahrzeug belastungsfrei, d. h. ohne manuellen Antrieb über Muskelkraft und/oder über einen gegebenenfalls vorgesehenen Elektromotor, vorwärts oder auch rückwärts rollt.

Gemäß einer möglichen Ausgestaltung kann das Stützrad über eine Feder in ihrer Kontaktstellung zu der Felge des Rades belastet sein, beispielsweise über eine gegen die Drehachse des Stützrades mittelbar oder unmittelbar wirkende Druckfeder. Hieraus ergibt sich eine, gegebenenfalls kontinuierliche, Federbelastung in Richtung auf die Kontaktstellung, sodass auch bei stärkerer Stoßeinwirkung auf das entsprechende Rad der Kontakt zwischen Stützrad und Felge bevorzugt nicht aufgehoben ist.

Alternativ oder auch kombinativ zu der vorbeschriebenen Ausgestaltung kann das Stützrad motorisch verstellbar sein. Über diese motorische Verstellung kann bevorzugt die Kontaktkraft zwischen Stützrad und Felge gezielt geschaltet beziehungsweise geregelt werden. Diese Schaltung beziehungsweise Regelung kann willensbetont durch den Fahrer des Fahrzeugs herbeigeführt werden. Bevorzugt ist diesbezüglich eine bevorzugt elektronische Schaltungs-/Regelungssteuerung, welche in Abhängigkeit von erfassten Parametern, wie beispielsweise Laufrichtung, aktive Belastung durch Antrieb des Rades über Muskelkraft und/oder Elektromotor, Stoßeinwirkung auf das Rad usw. die Kontaktkraft reguliert.

Das vorbeschriebene Stützrad kann dabei allein die Funktion der Abstützung beziehungsweise Zentrierung und Führung der Felge haben, darüber hinaus aber auch gegebenenfalls die Funktion als Antriebsrad, welches entsprechend antreibend auf die Felge und somit auf das Rad wirkt.

Das Stützrad kann reibschlüssig oder auch formschlüssig, gegebenenfalls auch kombiniert, auf die Felge einwirken. Hierzu kann hinsichtlich Formschluss eine Verzahnung an der Felge und dem Stützrad vorgesehen sein.

Zur motorischen Verstellbarkeit kann ein Aktor vorgesehen sein, der auf eine das Stützrad durchsetzende Achse einwirkt, wobei die Achse abgekröpft verläuft. Der Aktor kann dabei, wie auch bevorzugt, ein linear verstellbares Funktionsteil sein, welches elektrisch, insbesondere elektromotorisch beaufschlagbar ist. Dabei kann weiter das Funktionsteil des Aktors exzentrisch auf die das Stützrad tragende Achse einwirken, wobei weiter zufolge der abgekröpften Ausgestaltung der Achse eine Drehung derselben zu einer Verstellung der geometrischen Drehachse des Stützrades insbesondere in Radialrichtung führt, wodurch eine Einstellung der Kontaktkraft, d. h. der belastenden Einwirkung des Stützrades nach radial außen auf die zu führende Felge ermöglicht ist.

Dabei kann weiter über eine oder mehrere Federn eine gegebenenfalls in jeder Achsausrichtung auf das Stützrad, insbesondere auf die Achse, einwirkende Vorspannkraft in Richtung auf die Kontaktstellung zu der Felge gegeben sein. Durch die Einwirkung über den Aktor wird bevorzugt gegen diese Vorspannkraft, diese überwindend, gearbeitet.

In diesem Zusammenhang erweist es sich weiter von Vorteil, wenn bei einer über den Aktor herbeigeführten Kontaktaufhebung zwischen Stützrad und Felge die auf die abgekröpfte Achse einwirkende Federkraft ausgeschaltet ist. Dies kann zufolge einer vollständigen Entspannung der Feder oder auch zufolge eines vorgesehenen Anschlags in dieser Achsstellung erreicht sein.

Der Aktor kann darüber hinaus beispielsweise mit einem selbsthemmenden Getriebe versehen sein, sodass jede Aktorstellung gesichert ist. Darüber hinaus kann diesbezüglich ein Schrittmotor vorgesehen sein, mittels welchem nicht nur eine binäre Steuerung des Stützrades zwischen einer Kontaktstellung und einer Kontakt-Aufhebestellung ermöglicht ist, sondern darüber hinaus auch eine Kontaktkraftregelung. In diesem Fall ist weiter bevorzugt ein Sensor vorgesehen, welcher die Kontaktkraft misst und je nach Lastfall regelt.

Wenn das Fahrrad vorwärts rollt, also nicht aktiv angetrieben wird, kann ein Freilauf im Hinblick auf das Stützrad erforderlich sein, um über hierrüber wiederum die Wickelrolle nicht zurückzudrehen. Dieser, erste, Freilauf kann zwischen der Abtriebswelle und dem Stützrad vorgesehen sein.

Für den Lastfall, dass das Fahrrad ohne Antrieb zurück bewegt wird, kann ein zweiter Freilauf vorgesehen, der in diesem Fall dann blockiert. Dies kann in einer möglichen Ausgestaltung zwar dazu führen, dass das Stützrad nicht mehr relativ zu der Felge drehen kann. Dadurch wird ein beziehungsweise der Aktor geschaltet, d.h. aktiviert und wird die Achse, bevorzugt die abgekröpfte Achse, hierdurch zu einer Welle. Es ergibt sich ein Drehantrieb der Welle. Für diesen Belastungsfall ist aber im Hinblick auf einen Reibschluss eine insofern gleitende Bewegung relativ zu der Felge durchaus zumutbar.

In weiterer Ausgestaltung kann eine geometrische Vorderradachse, die sich im Nutzungszustand im Wesentlichen horizontal erstreckt, abhängig von der Lenkstellung mit einer durch zwei Verlagerungswege von zwei bezüglich des Vorderrades gegenüberliegenden Tretpedalen gegebenen Ebene oder einer hierdurch gegebenen gekrümmten Fläche unterschiedliche Schnittwinkel einnehmen.

Die Verlagerungswege der beiden Tretpedale können bei einem jeweils linearen Verlagerungsweg eine Fläche aufspannen, die die senkrecht zu der geometrischen Vorderradachse verlaufende Radebene durchsetzt. Bei gekrümmt verlaufenden Verlagerungswegen der Tretpedale ergibt sich entsprechend eine gekrümmte Verlagerungsweg-Fläche, die die Radebene durchsetzt. Diese gekrümmte Verlagerungsweg-Fläche kann sich bei Kurbeln, wie diese von üblichen Fahrrädern her bekannt sind, zu einer kreiszylindrisch umlaufenden Fläche ergänzen.

Die Verlagerungsweg-Fläche ist bevorzugt überwiegend und weiter bevorzugt vollständig in einer Radsilhouette gegeben. Mit Radsilhouette ist hierbei die durch den Reifen gegebene Radfläche angesprochen, die in einer Seitenansicht, bei der sich eine jedenfalls geometrische Drehachse des Rades beziehungsweise der Felge als Punkt abbildet, gegeben ist.

Je nach eingenommener Lenkstellung des Vorderrads erstreckt sich die geometrische Vorderradachse in unterschiedlichen Schnittwinkeln zu der Verlagerungsweg-Fläche beziehungsweise -Ebene, wobei die Verlagerungswege-Fläche beziehungsweise -Ebene unabhängig von der Lenkstellung des Vorderrads im Hinblick auf einen Fahrzeugrahmen des Fahrzeugs und somit weiter im Hinblick auf die Sitzposition des Fahrers hinsichtlich deren Ausrichtung unbeeinflusst bleibt.

Gemäß einer weiter bevorzugten Ausgestaltung kann das Vorderrad als nabenloses Rad ausgebildet sein, mit einem auf das Rad einwirkenden Antriebselement. Dabei kann, wie auch weiter bevorzugt, allein der Radreifen bevorzugt zusammen mit der den Radreifen tragenden Radfelge um die geometrische Radachse drehbar angeordnet sein, wodurch der hierdurch erreichte nabenfreie Bereich des Vorderrades gegebenenfalls genutzt sein kann zur Anordnung von mit dem oder den Tretpedalen zusammenwirkenden Antriebsmitteln. Auch kann dieser nabenfreie Bereich beispielsweise von solchen Antriebsmittel zumindest in von einer üblichen Geradeausfahrt abweichenden Lenkstellungen des Vorderrades zumindest partiell durchsetzt sein.

Die nabenfreie Ausgestaltung des Vorderrades erweist sich insbesondere bei einer Entkopplung des Verlagerungswegs des Tretpedals von der Lenkstellung des Vorderrades von Vorteil.

Das Antriebselement kann, wie auch bevorzugt, insbesondere mit der Radfelge des Vorderrades zusammenwirken.

Gemäß einer bevorzugten Ausgestaltung können auch mehrere solcher Antriebselemente in dem Vorderrad vorgesehen sein, wobei gegebenenfalls nur ein Antriebselement aktiv angetrieben ist und gegebenenfalls weiter vorgesehene weitere Antriebselemente nur mittelbar, wobei die weiteren Antriebselemente im Wesentlichen auch als Führungselemente ausgebildet sein können. Vorteilhaft erweist sich die Anordnung von beispielsweise drei Antriebs- und/oder Führungselementen, welche weiter bevorzugt über den Umfang betrachtet gegebenenfalls gleichmäßig zueinander beabstandet angeordnet sein können.

Die Antriebselemente beziehungsweise Führungselemente können dabei rollenartig ausgebildet sein, wobei insbesondere bezüglich des Antriebselementes eine Drehmomentübertragung auf das Vorderrad, insbesondere auf die Radfelge des Vorderrades, beispielsweise durch Reibschluss und/oder Formschluss, insbesondere im Hinblick auf Formschluss durch eine Verzahnung, erreicht sein kann.

Die Antriebs-/Führungselemente dienen darüber hinaus bevorzugt auch zur Zentrierung der Radfelge zusammen mit dem Radreifen im bevorzugt allen Dimensionen.

In weiterer Ausgestaltung ist bevorzugt, dass das Tretpedal linear oder auf einer Kreisbahn bewegbar ist. Bezüglich der Kreisbahn ist bevorzugt eine gleichmäßige Krümmung, weiter bevorzugt mit gleichbleibendem Radius über den gesamten Verlagerungsweg, wobei weiter bevorzugt die Krümmung beziehungsweise der gewählte Radius ergonomisch günstig zur entsprechenden Betätigung des Tretpedals gewählt ist. Der lineare Verlagerungsweg entlang einer Geraden beziehungsweise der gekrümmte Verlagerungsweg entlang einer Kreisbahn ergibt sich bevorzugt in der vorbeschriebenen Verlagerungsweg-Ebene.

Auch kann das Tretpedal auf eine relativ zu dem Vorderrad feststehende Übertragungswelle wirken, wobei weiter die Übertragungswelle mit einer in der Lenkachse des Vorderrades verlaufenden Abtriebswelle getriebemäßig zusammenwirken kann. Die Anordnung der Abtriebswelle in der geometrischen Lenkachse des Vorderrades kann in Art einer Königswelle gegeben sein und erweist sich vorteilhaft im Zusammenhang mit der Entkopplung von Tretpedal-Verlagerungsweg und Lenkbarkeit des Vorderrades.

Die Übertragungswelle, auf welche das Tretpedal wirkt, kann in vorteilhafter Weise den bevorzugt nabenfreien Bereich des Vorderrades zumindest teilweise durchsetzen, dabei gegebenenfalls eine mechanische Verbindung beidseitig des Vorderrades vorgesehener Tretpedale bilden.

Dabei kann weiter beispielsweise in der Übertragungswelle, gegebenenfalls aber auch alternativ in der Abtriebswelle, mindestens eine Getriebestufe vorgesehen sein, weiter bevorzugt aufweisend einen Freilauf für die Tretpedale.

Die Übertragung von dem Tretpedal auf das Antriebselement kann gemäß einer weiter möglichen Ausgestaltung in Art einer Kardanwelle, weiter beispielsweise in Art einer Gelenk-Kardanwelle gegeben sein.

Zur Schaffung einer möglichst großen und ausreichenden Bodenfreiheit im Bereich des Tretpedals, insbesondere bei Kurvenfahrten, kann die Übertragungswelle versetzt zu einer geometrischen Drehachse des Vorderrades verlaufen. Dieser Versatz kann, wie auch bevorzugt, im Wesentlichen entlang der Lenkachse des Vorderrades nach oben, entsprechend unter zunehmender Distanzierung zum Boden, gegeben sein. So kann ein diesbezügliches Versatzmaß zwischen der geometrischen Drehachse des Vorderrades und der geometrischen Drehachse der Übertragungswelle beispielsweise 30 bis 80 mm, weiter beispielsweise etwa 50 mm betragen.

Die Zusammenwirkung der Abtriebswelle mit dem auf das Vorderrad, insbesondere auf die Radfelge, einwirkenden Antriebselement kann gemäß einer bevorzugten Ausgestaltung getriebemäßig erfolgen. Ein solches Getriebe kann eine gegebenenfalls schaltbare Unter- und/oder Übersetzung aufweisen.

Im Inneren des Rades kann ein feststehendes Halterungsteil ausgebildet sein, zu welchem das Rad, insbesondere der Radreifen mit der Radfelge, relativ umlaufend kann. Das Halterungsteil kann dabei, wie weiter bevorzugt, Teil der Vorderrad-Gabel sein.

Darüber hinaus können auch mehrere derartige Halterungsteile in Art von Querstreben vorgesehen sein, die weiter beispielsweise in einem Befestigungsbereich untereinander die Antriebs- und/oder Führungselemente haltern können. So können bei einer beispielhaften Anordnung von drei Antriebs-/Führungselementen drei strebenartige Halterungsteile vorgesehen sein.

Das oder die Halterungselemente können darüber hinaus mit dem von dem Benutzer zu bedienenden Lenker zum Lenken des Vorderrades verbunden sein, insbesondere starr verbunden sein. Die durch den Benutzer ausgelöste Lenkbewegung wirkt so bevorzugt entsprechend unmittelbar oder mittelbar auf das Halterungselement beziehungsweise die Halterungselemente und über diese über die Antriebs- und/oder Führungselemente auf den Radreifen des Rades.

Das Tretpedal kann eine beispielsweise um die geometrische Drehachse der Übertragungswelle drehbare Kurbel aufweisen, weiter beispielsweise gemäß der Anordnung bei üblichen Fahrrädern. Hierbei ergibt sich bevorzugt ein kreisförmiger Verlagerungsweg des Tretpedals. Dabei kann eine unmittelbare Betätigung des Tretpedals durch den Benutzer, ähnlich der Betätigung beim üblichen Fahrradfahren, gegeben sein, bei welcher Betätigung der das Tretpedal beaufschlagende Fuß des Benutzers die Kreisbahn mit vollzieht.

In alternativer Ausgestaltung kann auf ein solches entlang einer Kreisbahn kurbelartig bewegbares Tretpedal über eine linear geführte Tretplatte in Art einer Stepperplatte eingewirkt werden. Das kurbelartige Tretpedal kann dabei an der Tretplatte im Wesentlichen quer zur Führung der Tretplatte linear geführt sein. Die translatorische Bewegung der Tretplatte wird so in eine Rotationsbewegung des kurbelartig in einer Kreisbahn bewegbaren Tretpedals gewandelt.

Die Tretplatten beider Seiten können dabei gemäß einer möglichen Ausgestaltung über eine, den nabenfreien Bereich des Vorderrades durchsetzende Wippe miteinander bewegungsgekoppelt sein.

Bei einer linearen Bewegung des Tretpedals, beispielsweise in Art einer Stepperplatte, kann die Pedalkraft alternativ auf eine axial feststehende Spindel übertragbar sein, von der über eine getriebemäßige Kopplung die Kraft auf die Übertragungswelle übertragbar ist. Die getriebemäßige Kopplung kann beispielsweise über ein Seil, eine Kette, einen Zahnriemen oder einen Riemen gegeben sein kann.

Zur Übertragung der linearen Bewegung des Tretpedals auf die Spindel kann das Tretpedal beispielsweise mit einer an das Spindelgewinde angepassten Gewindemutter versehen sein, um so die translatorische Bewegung des Tretpedals in eine Rotationsbewegung der Spindel umzusetzen.

Auch kann die Pedalbewegung beispielsweise mittels eines mindestens ein Seil und Umlenkrollen aufweisenden Seilzugs auf das Antriebselement übertragbar sein. Zugeordnet jedem Tretpedal ist dabei zumindest ein Seil, bevorzugt eine Mehrzahl von Seilen, wie beispielsweise zwei Seile, wobei weiter jedem Tretpedal mindestens eine Seilwickelrolle zugeordnet sein kann.

Im Zuge eines Tretrythmus wird das Seil von der Seilwickelrolle durch die beaufschlagende Kraft des Tretpedals von der Wickelrolle abgerollt und die Seilwickelrolle bei der Beaufschlagung dann eines weiteren Tretpedals, wenn das erste Tretpedal sich durch eine Triebfeder zurückbewegt. Die Triebfeder ist innerhalb der Seilwickelrolle, beispielsweise in Form einer langgestreckten Wendelfeder, angeordnet. Bevorzugt haben beide Seilwickelrollen dann entsprechende Triebfedern jeweils zur Zurückstellung.

Jede Seilwickelrolle kann dabei mit einem Freilauf versehen sein, bevorzugt im Übertragungsbereich zwischen Seilwickelrolle und Antriebselement, um das beschriebene Zurücklaufen der Seilwickelrolle bevorzugt unter Antrieb der Triebfeder, zu ermöglichen.

Ein Abschnitt des Seilzugs kann sich dabei im Wesentlichen entlang der geometrischen Drehachse des Vorderrades und/oder entlang der Lenkachse erstrecken. So sind weiter bevorzugt Umlenkrollen für das Seil so angeordnet, dass eine Seiltangente des Seilzug möglichst nah an der Lenkachse sich erstreckt, um so nur eine geringe Bewegung des Seils in einer Richtung quer zur Seilerstreckung bei einem Lenken des Vorderrades zuzulassen. In optimaler Ausgestaltung erstreckt sich die Seiltangente entlang der geometrischen Lenkachse, kann aber zu dieser auch einen Abstand - bei bevorzugt etwa paralleler Ausrichtung zu der Lenkachse - von beispielsweise bis zu 50 mm, weiter beispielsweise bis zu 20 bis 30 mm aufweisen. Weiter kann die Seiltangente zu der geometrischen Lenkachse gegebenenfalls einen spitzen Winkel von wenigen Winkelgraden, beispielsweise 1 bis 5 Grad, einschließen.

In weiterer Ausgestaltung kann das Tretpedal auf einer Kreisbahn bewegbar sein und mit einem zumindest sektorförmigen Seilzugteil verbunden sein, das eine Führungsfläche für das Seil bildet, wobei die Führungsfläche - mit Bezug auf eine geometrische Tretkurbelachse des Tretpedals - bogenförmig verläuft, wobei weiter das Seil bei einem niedergedrückten Tretpedal über einen größeren Abschnitt in der Führungsfläche aufgenommen ist als bei einem hochgeschwenkten Tretpedal. Jedes Tretpedal ist dabei bevorzugt mit einem sektorförmigen Seilzugteil versehen. Das jeweils in dem Seilzugteil geführte Seil ist, wie vorbeschrieben, mit einer Seilwickelrolle verbunden, über welche Seilwickelrolle mittelbar oder unmittelbar der Antrieb des Rades erfolgt.

Die Führungsfläche des Seilzugteils verläuft bogenförmig entlang einer sich auf eine Drehachse des Seilzugteils beziehenden Kreisbogenlinie, wobei weiter die Führungsfläche mit Bezug auf einen Querschnitt in Richtung dieser Drehachse zur günstigen Führung des Seils beispielsweise V-förmig gestaltet sein kann.

Das sektorförmigen Seilzugteil erstreckt sich bezüglich der kreisbogenförmigen Führungsfläche bevorzugt über einen Winkel von etwa 80 bis 100 Grad, bevorzugt etwa 90 Grad.

Über die bogenförmige Führung des Seils in jeder Tretpedalstellung ist bevorzugt stets ein winkelmäßig gleichbleibender Einlauf beziehungsweise Ablauf des Seils relativ zu der Wickelrolle gegeben. Dabei kann bei einem niedergedrückten Tretpedal eine größere Führung in der Führungsfläche gegeben sein, gegebenenfalls bis hin zu einer Führung des Seilabschnitts über die gesamte Bogenlänge der Führungsfläche. Bei hochgeschwenktem Tretpedal kann dagegen gegebenenfalls eine nahezu aufgehobene Führung bei Festlegung des Seils endseitig der Führungsfläche gegeben sein.

Das Seilzugteil kann gemäß einer bevorzugten Ausgestaltung um dieselbe geometrische Achse wie das Tretpedal verschwenkbar sein. Entsprechend können ein Seilzugteil und das zugeordnete Tretpedal auf einem gemeinsamen Achskörper schwenkbeweglich angeordnet sein.

Das Tretpedal kann in weiterer Ausgestaltung mit dem Seilzugteil verbunden sein, sodass eine Bewegung des Tretpedals zu einer entsprechenden Mitnahme des Seilzugteils führt. Diese Verbindung kann derart gestaltet sein, dass mit dem Tretpedal mittelbar oder unmittelbar punktartig auf das Seilzugteil einwirkbar ist. Punktartig bezieht sich dabei bevorzugt auf eine Kontaktfläche, die sich in einem Querschnitt punktartig darstellen kann, jedoch gegebenenfalls in einem hierzu senkrechten Schnitt gegebenenfalls linienartig. So kann sich weiter eine solche punktartige Kontaktierung durch eine entsprechende Beaufschlagung auf das Seilzugteil über einen Walzenkörper ergeben.

Der Einwirkungspunkt des Tretpedals auf das Seilzugteil ist in bevorzugter Ausgestaltung in Bezug auf die Achse radial verstellbar. So kann durch Verschiebung dieses Einwirkpunktes eine Getriebeübersetzung erreicht werden, wobei der Schwenkhub des Tretpedals unverändert bleibt. In Abhängigkeit von dem eingestellten Einwirkpunkt ergeben sich unterschiedlich lange, auf das sektorartige Seilzugteil einwirkende Hebelarme.

So kann weiter an dem Tretpedal, weiter beispielsweise an einem mit dem Tretpedal schwenkfest verbundenen Mitnehmer, ein Laufwagen ausgebildet sein, weiter beispielsweise aufweisend mehrere, beispielsweise drei, Rollen beziehungsweise Walzen. Dies erweist sich im Hinblick auf die zu übertragenden Kräfte einerseits und die Verfahrkräfte bei einer Änderung der Übersetzung andererseits als günstig.

Zusätzlich zu dem durch aufgebrachte Muskelkraft angetriebenen Antriebselement kann ein Antriebselement oder können mehrere Antriebselemente über fest in dem Vorderrad angeordnete Elektromotoren angetrieben sein. Ein solcher Elektromotor kann gegebenenfalls auf dasselbe Antriebselement wirken, welches auch über Muskelkraft antreibbar ist. Weiter kann der Elektromotor beispielsweise starr mit einer Welle, beispielsweise Übertragungswelle oder Abtriebswelle, verbunden sein oder auch weiter alternativ über eine gesonderte Welle auf ein gesondertes Antriebselement einwirken. Auch kann bei einer Mehrzahl von Antriebselement beispielsweise jedem Antriebselement ein solcher Elektromotor zugeordnet sein.

In vorteilhafter Weise wirkt der Elektromotor rekuperativ.

Auch kann ein Elektromotor alternativ oder kombinativ zu einer Anordnung im Vorderrad in oder an dem Hinterrad vorgesehen sein. Darüber hinaus können insgesamt mehrere antreibende Elektromotoren angeordnet sein.

Ein insbesondere den Elektromotor speisender Akkumulator kann darüber hinaus ebenfalls in dem nabenfreien Vorderrad angeordnet sein, alternativ jedoch auch in einem Bereich des Fahrzeugrahmens. Bei Anordnung eines solchen Akkumulators in dem nabenfreien Vorderrad kann dieses an einem oder mehreren Halterungsteilen des Vorderrad befestigt sein und gegebenenfalls bei entsprechender Ausbildung des das Vorderrad vorderseitig umgreifenden Bügels zur Diebstahlssicherung des Fahrzeugs über diesen Bügel aufladbar sein.

Bei einem über Muskelkraft antreibbaren Seilzug kann in weiterer Ausgestaltung in dem Seil und/oder in den Umlenkrollen beziehungsweise den Rollenhalterungen ein Zugsensor (DMS) vorgesehen sein, zur Steuerung des Elektromotors.

Die Antriebselemente - darüber hinaus bevorzugt auch die gegebenenfalls vorgesehenen Führungselemente - können mit dem feststehenden Halterungsteil beziehungsweise den feststehenden Halterungsteilen des Vorderrades verbunden sein. Die Halterungsteile bieten bevorzugt die Drehlagerung dieser Elemente.

Auch kann die Lenkachse des Vorderrades mit einer Senkrechten einen spitzen Winkel von mehr als 15 Grad einschließen, so beispielsweise einen spitzen Winkel von 20 bis 45 Grad, sodass sich hieraus ein günstiger Geradeauslauf des Fahrzeugs ergibt.

Eine Höhenverstellung des Sitzteils kann bevorzugt parallel oder annähernd parallel - beispielsweise unter Einschluss eines spitzen Winkels von wenigen Winkelgraden, weiter beispielsweise von bis zu 1 Grad, 2 Grad oder 5 Grad - zu der Lenkachse ermöglicht sein. Hieraus ergibt sich in jeder Sitzteil-Höhenstellung eine ergonomisch günstige Ausrichtung des Körpers zu den Tretpedalen und/oder zu dem Lenker. Die gewünschte Sitzteil-Höhenstellung ist bevorzugt fixierbar, beispielsweise zufolge einer Klemmung.

Auch kann gemäß einer möglichen Ausgestaltung der Lenker bevorzugt entlang der Lenkachse des Vorderrades und somit bevorzugt parallel zu dem Sitzteil höhenverstellbar sein.

Darüber hinaus kann das Sitzteil aus einer Nutzungsposition in eine Ein- oder Aussteigposition in Richtung auf das Hinterrad, beispielsweise entlang eines Längsträgers des Fahrzeugrahmens, verschiebbar sein, wobei insbesondere die verschobene Position bevorzugt verrastbar ist. In der nach hinten verschobenen Position des Sitzteils ist das Einsteigen und Aussteigen vereinfacht. Bevorzugt bleibt auch im Zuge dieser linearen Verlagerung des Sitzteils die gewählte Sitzteil-Höhenstellung erhalten. Auch ist durch eine solche Verlagerbarkeit eine Anpassung der Sitzposition relativ zu den Tretpedalen ermöglicht, entsprechend eine Anpassung an die jeweilige Körpergröße.

Insbesondere die Nutzungsposition des Sitzteils als auch die Ein- beziehungsweise Aussteigposition des Sitzteils sind bevorzugt rastfestlegbar. Dies kann weiter dazu genutzt sein, dass in einer gesicherten Position des Fahrzeugs das in der Aussteigposition befindliche Sitzteil nur im Zuge einer ordnungsgemäßen Inbetriebnahme des Fahrzeugs durch den berechtigten Benutzer aus der Rast gelöst und zurück in die Nutzungsposition verlagert werden kann. In der verrasteten Aussteigposition des Sitzteils ist das Fahrzeug nicht fahrbar.

Auch kann das Sitzteil mittels einer Feder in seine Nutzungsstellung vorgespannt sein. Die Verlagerung des Sitzteils aus dieser Nutzungsstellung heraus, beispielsweise in Richtung auf eine Ein- beziehungsweise Aussteigposition des Sitzteils, erfolgt entsprechend entgegen der Rückstellkraft einer solchen Feder. Es kann sich dabei beispielsweise um eine übliche Zylinder-Druckfeder oder -Zugfeder handeln.

In alternativer Ausgestaltung kann eine solche Feder das Sitzteil aus der Nutzungsstellung heraus in eine zurückverlagerte Ein- beziehungsweise Aussteigposition belasten, sodass nach Aufhebung einer Verrastung oder dergleichen des Sitzteiles dieses selbsttätig in die ein bequemes Einsteigen beziehungsweise Aussteigen ermöglichende Position verlagert wird.

Dabei kann gemäß einer weiter bevorzugten Ausgestaltung das Sitzteil mittels eines Fallenschlosses verriegelbar sein. Das Fallenschloss kann dabei bevorzugt eine rahmenfeste Gabelfalle aufweisen, die mit einem sitzteilseitig befestigten Schließbolzen zusammenwirken kann. Die Gabelfalle ist um eine Achse drehbar angeordnet. Weiter kann die Gabelfalle zur Anpassung der Sitzposition an die Körpergröße des Fahrers entlang des Rahmens, beispielsweise des Längsträgers, verstellbar festlegbar sein.

Bevorzugt wird mit Verlagerung des Sitzteils in Richtung auf die Nutzungsstellung unmittelbar und ohne weitere Einwirkung durch den Nutzer die Verriegelungsposition in dem Fallenschloss eingenommen. Dies kann bei entsprechender Anordnung und Ausbildung einer Rückstellfeder allein zufolge der Rückstellkraft der auf das Sitzteil einwirkenden Feder erreichbar sein.

Auch können die Gabelfalle an dem Sitzteil und der Schließbolzen rahmenseitig vorgesehen sein.

Darüber hinaus kann das Fahrzeug zur Diebstahlssicherung weiter eine elektronische Wegfahrsperre aufweisen.

Ein schon angesprochener Witterungsschutz kann mit Bezug auf eine Seitenansicht des Fahrzeugs im Wesentlichen umfassend geschlossen vorgesehen sein, jedenfalls im Hinblick auf vorne, unten und oben, gegebenenfalls auch bezüglich eines Schutzes von hinten. Zudem kann ein seitlicher Witterungsschutz vorgesehen sein, der insbesondere die Tretpedale umgibt. Dieser seitliche Witterungsschutz kann auch zum Auf- beziehungsweise Absteigen öffenbar sein, beispielsweise in Art eines Rollos.

Die Schräglagenfreiheit des Fahrzeuges, d.h. der mögliche Neigungswinkel bei einer Durchfahrt von Kurven, ist u.a. durch die Anordnung der Tretpedale zum Antrieb des Fahrzeuges über Muskelkraft beschränkt. Eine größere Schräglagenfreiheit ist beispielsweise durch Vergrößerung des Vorderraddurchmessers möglich, beispielsweise unter Nutzung eines vergleichsweise großen Vorderrades, das weiter beispielsweise 28 oder 29 Zoll Durchmesser aufweisen kann. Dabei kann das Vorderrad grundsätzlich im Durchmesser größer gewählt sein als das Hinterrad. Auch kann der Reifenquerschnitt beziehungsweise der Reifendurchmesser zu diesem Zwecke erhöht werden. Darüber hinaus können die Tretkurbeln in ihrer Länge in Radialrichtung - bezogen auf die Antriebsachse - reduziert werden.

Dabei kann der Durchmesser des Vorderrades beispielsweise etwa dem 1,1- bis 2-Fachen, weiter beispielsweise etwa dem 1,5-Fachen des Durchmessers des Hinterrads entsprechen. In diesem Zusammenhang kann vorgesehen sein, dass das Vorderrad einen Durchmesser von beispielsweise von 24 Zoll. Hierbei kann das Vorderrad auch tendenziell eher noch größer sein und das Hinterrad tendenziell eher noch kleiner.

Eine weitere Möglichkeit zur Erhöhung der Schräglage ist ein Versatz der Tretkurbelachse aus der koaxialen Anordnung zu der Radachse, insbesondere ein Versatz in radialer Richtung zu der Radachse unter Vergrößerung des Abstandes der Tretkurbelachse zum Boden. Hierdurch kann weiter eine erste Übersetzungsstufe realisiert werden.

Bezüglich des Elektromotors kann dieser gegebenenfalls unterschiedliche Fahrmodi vorhalten, so beispielsweise unter anderem einen Economy-Modus. In einem solchen Economy-Modus kann beispielsweise der Stromverbrauch eines zum Antrieb des Elektromotors vorgesehenen Akkumulators gemessen und gegebenenfalls begrenzt werden. Darüber hinaus kann auch eine Regelung eines gegebenenfalls vorgesehenen Automatikgetriebes hierüber erfolgen.

Eine vorgesehene Steuerungselektronik kann in weiterer Ausgestaltung beispielsweise dazu genutzt sein, die zur Aktivierung des unterstützenden Elektromotors notwendige zugeführte Muskelkraft in Abhängigkeit von der Konstitution und/oder dem Alter des Benutzers anzupassen. So kann beispielsweise bei einem weniger sportlichen und/oder älteren Menschen eine zuzuführende Mindest-Muskelkraft von beispielsweise 50 Watt eingestellt werden, während bei beispielsweise sportlichen Menschen gegebenenfalls eine 200 Watt-Grenze vorgegeben werden kann. Auch kann beispielsweise in einem Teach-In-Verfahren eine Drehmomentanpassung an eine gewünschte, übliche Trittfrequenz vorgenommen werden.

Auch kann über die Elektronik eine Auswertung der verbrauchten Kalorien durchgeführt werden. Eine benutzerfreundliche Bedienoberfläche bei Ausbildung eines Bedienpanels, beispielsweise in Form eines Touchscreens, bietet weitere Vorteile in der Handhabung des Fahrzeuges.

Die Lenkung kann mechanisch erfolgen, beispielsweise über einen durch den Benutzer zu betätigenden Lenker oder Lenkrad. Die mechanische Übertragung kann über einen Bowdenzug oder über eine Lenkstange gegeben sein.

In weiterer Ausgestaltung kann weiter ein Lenkungsdämpfer vorgesehen sein, zur im Wesentlichen Zentrierung des gelenkten Rades. Ein Einlenken aus einer Mittelstellung heraus in die eine oder die andere Lenkrichtung erfolgt so bevorzugt gegen eine rückstellende Kraft des Lenkungsdämpfers.

In weiterer Ausgestaltung kann, soweit ein Akkumulator vorgesehen ist, dieser an dem Rahmen, insbesondere an dem Längsträger, angeordnet sein und weiter bevorzugt verschiebbar angeordnet sein, um so eine optimale Gewichtsverteilung zu ermöglichen. In diesem Zusammenhang erweist sich weiter auch ein integriertes Ladegerät von Vorteil.

Zudem kann bei entsprechender Ausbildung eine Rekuperation, beispielsweise bei Bergabfahrten, darüber hinaus gegebenenfalls aber auch beim Bremsen gegeben sein. Eine solche Energie-Rückgewinnung kann insbesondere zufolge Anordnung zumindest eines Nabenmotors, beispielsweise im Vorderrad, ermöglicht sein.

Die Anbindung einer Rahmenkonstruktion und/oder des Witterungsschutzes im hinteren, dem Hinterrad zugewandten Bereich kann an der Sitzausformung, insbesondere im Bereich des Rückenteils gegeben sein, beispielsweise zufolge einer Verspannung über Seile oder seilartige Mittel.

Das Fahrzeug kann insbesondere auch im Sinne eines Lastenrades vorgesehen sein. In diesem Zusammenhang kann ein Lastenvorbau optional durch den Benutzer an dem Fahrzeug befestigbar vorgesehen sein und auch wieder entfernbar. Der Lastenvorbau kann als Halterungsteil gegeben sein, das wiederum eine Anordnung beispielswiese eines Koffers oder dergleichen oder von Satteltaschen einfach ermöglicht.

Darüber hinaus kann das Fahrzeug, beispielsweise zugewandt dem Hinterrad, eine Halterungsvorrichtung aufweisen, auf welcher beispielsweise Gepäck oder Fracht mittels Spanngurten befestigbar ist.

Bevorzugt ergibt sich bei dem vorgeschlagenen Fahrzeug eine annähernd aufrechte Sitzposition, wie diese auch beispielsweise beim üblichen Führen eines Automobils bekannt ist. Hierbei ist bevorzugt eine gegenüber dem Boden höhere Sitzposition gegenüber den bekannten Liegerädern gegeben, sodass sich eine bessere Übersicht beim Fahren des Fahrzeuges ergibt.

Die vor- und nachstehend angegebenen Bereiche beziehungsweise Wertebereiche oder Mehrfachbereiche schließen hinsichtlich der Offenbarung auch sämtliche Zwischenwerte ein, insbesondere in 1/10-Schritten der jeweiligen Dimension, gegebenenfalls also auch dimensionslos. Beispielsweise beinhaltet die Angabe 5 bis 50 Grad auch die Offenbarung von 5,1 bis 50 Grad, 5 bis 49,9 Grad, 5,1 bis 49,9 Grad, etc. Diese Offenbarung kann einerseits zur Eingrenzung einer genannten Bereichsgrenze von unten und/oder oben, alternativ oder ergänzend aber zur Offenbarung eines oder mehrerer singulärer Werte aus einem jeweilig angegebenen Bereich dienen.

### Kurze Beschreibung der Zeichnungen

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Die Zeichnung zeigt:
- Fig. 1: in perspektivischer Darstellung ein Fahrzeug in einer ersten Ausführungsform;
- Fig. 2: die Seitenansicht gegen das Fahrzeug gemäß Figur 1;
- Fig. 3: die Stirnansicht gegen das Fahrzeug;
- Fig. 4: eine perspektivische Detaildarstellung eines Vorderrad-Bereiches;
- Fig. 5: eine schematisch perspektivische, partiell geschnittene Darstellung des Vorderrad-Bereiches,
- Fig. 6: der Vorderrad-Bereich in Seitenansicht unter Fortlassung eines unteren Teils eines Witterungsschutzes;
- Fig. 7: den schematisch dargestellten Schnitt gemäß der Linie VII-VII in Figur 6;
- Fig. 8: eine schematische Unteransicht des Vorderrad-Bereiches;
- Fig. 9: den schematisch dargestellten Schnitt gemäß der Linie IX-IX in Figur 2;
- Fig. 10: den Vorderrad-Bereich in Seitenansicht, betreffend eine zweite Ausführungsform;
- Fig. 11: die schematisch perspektivische Darstellung des Vorderrad-Bereiches der Ausführungsform gemäß Figur 10, unter Fortlassung eines unteren Teils des Witterungsschutzes;
- Fig. 12: eine weitere perspektivische Darstellung des Vorderrad-Bereiches unter Fortlassung eines unteren Teils des Witterungsschutzes, betreffend eine dritte Ausführungsform;
- Fig. 13: eine schematisch perspektivische Darstellung des Vorderrad-Antriebs der dritten Ausführungsform;
- Fig. 14: eine Seitenansicht gegen den Vorderrad-Bereich unter Fortlassung eines unteren Teils des Witterungsschutzes, betreffend eine vierte Ausführungsform;
- Fig. 15: eine der Figur 14 im Wesentlichen entsprechende Darstellung, jedoch mit angeordnetem unteren Teil des Witterungsschutzes;
- Fig. 16: eine schematische Stirnansicht-Darstellung des Vorderrad-Antriebs der vierten Ausführungsform;
- Fig. 17: eine weitere schematische Detaildarstellung des Antriebs der vierten Ausführungsform;
- Fig. 18: eine schematisch perspektivische Detaildarstellung des Antriebs;
- Fig. 19: in perspektivischer Darstellung das Fahrzeug in einer weiteren Ausführungsform;
- Fig. 20: die Seitenansicht gegen das Fahrzeug der Ausführungsform gemäß Figur 19;
- Fig. 21: eine der Figur 20 im Wesentlichen entsprechende Darstellung, jedoch unterschiedliche Sitz- und/ oder Lenkerhöhen betreffend;
- Fig. 22: in perspektivischer Darstellung das Fahrzeug in einer weiteren Ausführungsform;
- Fig. 23: die Draufsicht auf das Fahrzeug der Ausführungsform gemäß Figur 22;
- Fig. 24: die Seitenansicht gegen das Fahrzeug, eine weitere Ausführungsform betreffend;
- Fig. 25: die Ausschnittvergrößerung XXV in Figur 24;
- Fig. 26: die Ansicht gemäß Pfeil XXVI in Figur 25 in einer perspektivischen Detaildarstellung;
- Fig. 27: die Ansicht gemäß Pfeil XXVII in Figur 26 in einer perspektivischen Detaildarstellung;
- Fig. 28: den schematisch dargestellten Schnitt gemäß der Linie XXVIII-XXVIII in Figur 25;
- Fig. 29: die schematische Ansicht gemäß Pfeil XXIX in Figur 28;
- Fig. 30: eine Getriebeanordnung in perspektivischer Darstellung;
- Fig. 31: einen Längsschnitt durch die Getriebeanordnung;
- Fig. 32: in schematischer Ansicht das Vorderrad des Fahrzeugs gemäß Figur 24, unter Fortlassung der Anordnung zum Antrieb über Muskelkraft, betreffend eine Rollbewegung des Fahrzeugs in üblicher Fahrtrichtung;
- Fig. 33: eine der Figur 32 entsprechende Darstellung, jedoch betreffend eine Rollbewegung des Fahrzeugs in eine Richtung entgegen der üblichen Fahrtrichtung;
- Fig. 34: eine Seilwickelrolle in perspektivischer Einzeldarstellung;
- Fig. 35: eine schematische Schnittdarstellung durch den Halterungsbereich eines Sitzteils in einer weiteren Ausführungsform, die übliche Nutzungsstellung betreffend;
- Fig. 36: eine der Figur 35 im Wesentlichen entsprechende Darstellung, jedoch eine Ein- beziehungsweise Aussteigposition des Sitzteils betreffend;
- Fig. 37: den Bereich XXXVII in Figur 32 in einer Schnittdarstellung;
- Fig. 38: in einer perspektivischen Detaildarstellung eine weitere Ausführungsform betreffend den Bereich eines Stützrades;
- Fig. 39: den Schnitt gemäß der Linie XXXIX-XXXIX in Figur 38;
- Fig. 40: die Ansicht gemäß Pfeil XL in Figur 39, betreffend eine Kontaktstellung das Stützrades;
- Fig. 41: eine der Figur 40 im Wesentlichen entsprechende Darstellung, jedoch betreffend eine Kontakt-Aufhebungsstellung des Stützrads;
- Fig. 42: eine schematische Darstellung einer geometrischen Vorderradachse in Abhängigkeit zu einer durch linear verlaufende Verlagerungswege gegebenen Fläche;
- Fig. 43: eine der Figur 42 im Wesentlichen entsprechende schematische Darstellung, jedoch bei gekrümmt verlaufenden Verlagerungswegen;
- Fig. 44: die senkrechte Projektion einer durch die gekrümmt verlaufenden Verlagerungswege aufgespannten Fläche sowie der geometrischen Vorderradachse gemäß Pfeil XLIV in Figur 43;
- Fig. 45: eine der Figur 24 im Wesentlichen entsprechende Darstellung eines Fahrzeugs in einer weiteren Ausführungsform;
- Fig. 46: eine der Figur 45 entsprechende Darstellung betreffend eine weitere Ausführungsform.

### Beschreibung der Ausführungsformen

Dargestellt und beschrieben ist ein Fahrzeug 1, hier beispielhaft in Form eines einspurigen, fahrradartigen Fahrzeugs 1, mit einem Vorderrad 2 und einem Hinterrad 3, einem im Wesentlichen das Vorderrad 2 und das Hinterrad 3 verbindenden Rahmen 4, weiter mit einer Sitzausformung 5 und gegebenenfalls einem insbesondere die Sitzausformung 5 zumindest teilweise überspannenden Witterungsschutz 6.

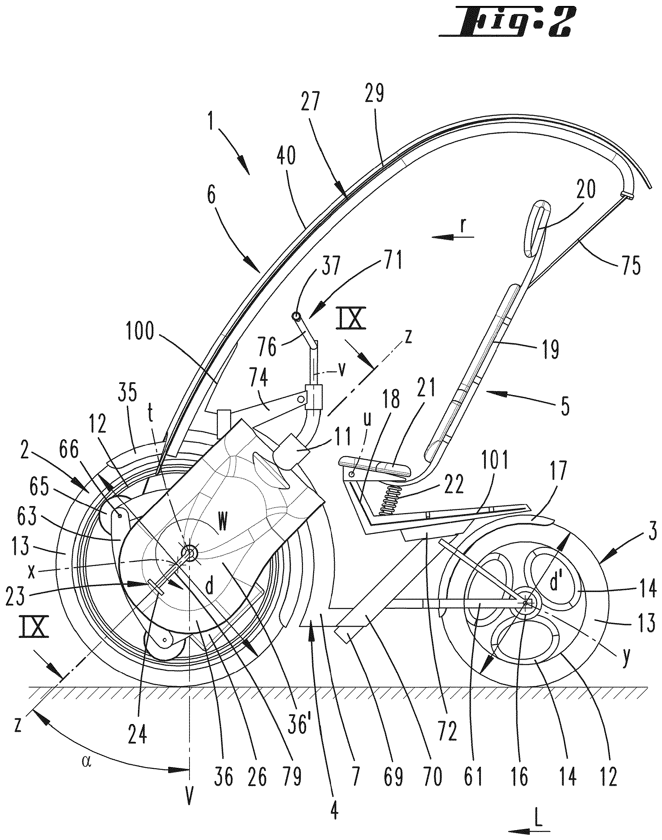

Der Rahmen 4 ist zunächst und im Wesentlichen gebildet durch einen mit Bezug auf eine Seitenansicht (siehe Figur 2) im Wesentlichen V-förmigen Grundträger 7, der für den Benutzer einen tiefgezogenen Einstieg erlaubt. An diesem Grundträger 7 sind unmittelbar oder mittelbar die wesentlichen Bestandteile des Fahrzeuges 1 befestigt.

So ist einerends des Grundträgers 7 das Hinterrad 3 im Bereich der geometrischen Radachse y um die Radachse y drehbar gehaltert. Hierzu kann der Grundträger 7 das Hinterrad 3 gabelartig beidseitig umfassen, wozu der Grundträger 7 im betreffenden Bereich in Art einer im Wesentlichen - mit Bezug auf eine übliche Nutzungsstellung des Fahrzeugs 1 - horizontal ausgerichtete Gabel 61 ausgebildet sein kann. Alternativ ist hier auch eine Einarm-Lösung möglich, bei welcher der Grundträger 7 nur mit einem Arm seitlich des Hinterrades 3 bis zur Radachse y geführt ist.

Abgewandt dem Hinterrad 3 kann sich der Grundträger 7 über eine Lenkgabel 62 an dem Vorderrad 2 abstützen. Die Anbindung der Lenkgabel 62 an dem Vorderrad 2 kann, wie auch bevorzugt, erreicht sein über ein feststehendes Halterungsteil 63, welches im bevorzugt nabenfreien Bereich des Vorderrades 2 vorgesehen ist und ein auf das Vorderrad 2 einwirkendes Antriebselement 64 trägt. Es ergibt sich bezüglich des Vorderrades 2 eine geometrische Radachse x. Auch bei der Lenkgabel 62 kann eine Einarm-Lösung gegeben sein.

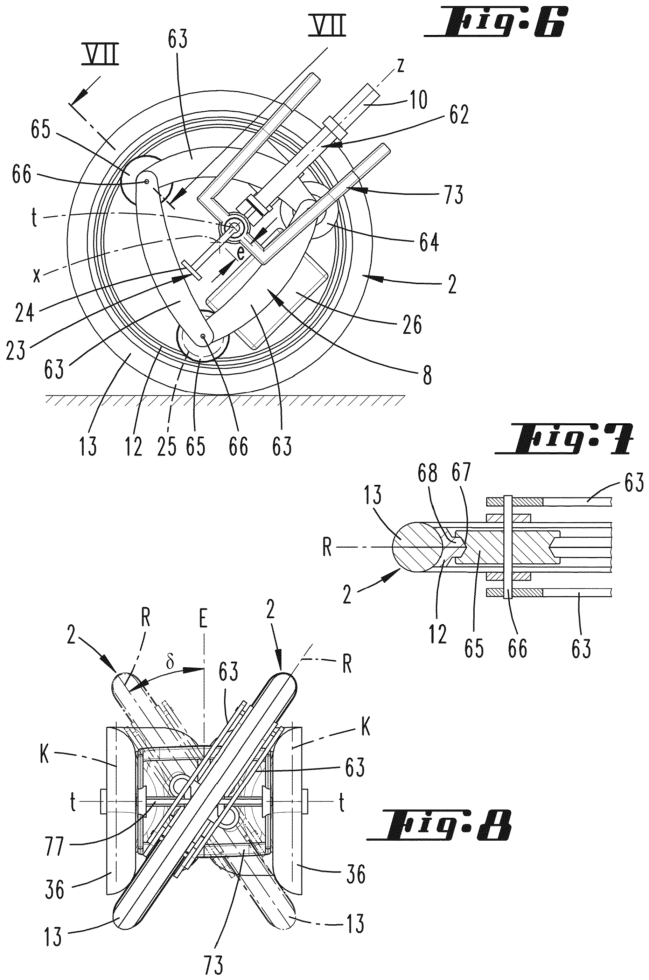

Die Befestigung 9 zwischen der Lenkgabel 62 und dem Halterungsteil 63 ist in der Figur 6 schematisch wiedergegeben.

Die Radachsen x und y von Vorder- und Hinterrad 2, 3 sind insbesondere in einer Grundausrichtung des Fahrzeuges 1 zum Geradeauslauf gleichgerichtet ausgerichtet.

Die Gabelschenkel der Lenkgabel 62 gehen in einen die Mantelfläche des Vorderrades 2 überspannenden Brückenabschnitt über, von welchem aus ein Lenkzapfen 10 sich weiter im Wesentlichen in Erstreckungsrichtung der Gabelschenkel erstreckt. Dieser Lenkzapfen 10 ist in einer entsprechend positionierten und dimensionierten Aufnahme 11 in einem Lenkkopfabschnitt des Grundträgers 7 drehbar aufgenommen. Die Ausbildung von Aufnahme 11 und Lenkzapfen 10 kann in Art eines von Fahrrädern bekannten Lenkkopfes gegeben sein, so weiter beispielsweise aufweisend ein Lenkkopflager, weiter gegebenenfalls ein Wellengelenk.

Die geometrische Lenkachse z kann zu einer Vertikalen V durch die Radachse x einen spitzen Winkel α von mehr als 15 Grad einschließen, beispielsweise etwa 20 bis etwa 45 Grad, weiter beispielsweise etwa 30 bis etwa 40 Grad. Es ergibt sich hieraus ein günstiger Nachlauf des Vorderrades 2.

In üblicher Weise weist jedes Rad eine Felge 12 mit einer hierauf aufgezogenen Bereifung 13 auf. Die Felge 12 ist dabei hinterradseitig bevorzugt über federbare Stützelemente 14 mit der Hinterradachse y verbunden, insbesondere mit einer Hinterradnabe 16.

Die Stützelemente 14 können, wie auch dargestellt, jeweils mit Bezug auf eine Seitenansicht gemäß Figur 2 eine langgestreckt ovale Form aufweisen mit im Wesentlichen in Umfangsrichtung weisender Längserstreckung. Die Abstützung an der Felge 12 beziehungsweise an der Nabe 16 kann jeweils im Bereich der gekrümmt verlaufenden Längsschenkel erreicht sein.

Die Stützelemente 14 wirken beispielsweise in Art einer Elliptikfeder.

Im nabenfreien Bereich des Vorderrades 2 können, wie bevorzugt, drei mit Bezug auf eine Seitenansicht gemäß Figur 2 bogenförmig verlaufende Halterungsteile 63 vorgesehen sein, die im Bereich ihrer jeweiligen Enden mit dem zugewandten Ende des in Umfangsrichtung des Vorderades 2 folgenden Halterungsteil 63 bevorzugt starr verbunden sind. Es ergibt sich entsprechend bevorzugt eine mit Bezug auf die Seitenansicht Dreieckanordnung der Halterungsteile 63. Diese Halterungsteile bilden zusammen ein Stützteil 8 für die Felge 12 mit der Bereifung 13.

Weiter bevorzugt sind die Halterungsteile 63 paarweise vorgesehen, wobei jeweils in Achsrichtung zueinander distanziert zwei Halterungsteile 63 im Bereich ihrer Enden zwischen sich ein Antriebs- und/oder Führungselement 64, 65 gabelförmig aufnehmen können.

In den Verbindungs-Eckbereichen der Halterungsteile 63 tragen diese frei um Achsen 66 mit jeweils einer geometrische Drehachse, die in Richtung der Vorderradachse x gerichtet ist, drehbare, rollenartige Antriebs- und/oder Führungselemente 64, 65.

Bevorzugt sind die Antriebs- und Führungselemente 64, 65 gleichmäßig über den Umfang verteilt.

Über die Antriebselemente 64 und die, Stützräder 15 bildenden Führungselemente 65 ist eine Zentrierung des Vorderrades 2, insbesondere der Felge 12 mit der Bereifung 13, in allen Dimensionen gegeben (vergl. Figur 6). Dabei können die Antriebs- und/ oder Führungselemente 64, 65 zur verzahnenden oder reibschlüssigen Drehmomentübertragung auf das Vorderrad 2 beziehungsweise auf die Felge 12 mit der Bereifung 13 eine bevorzugt im Umfangsrichtung umlaufende, mittige Nut 67 mit einem bevorzugt keilförmigen Nutboden aufweisen, in welche Nut 67 die Felge 12 mit einem radial nach Innen vorragenden, umlaufenden Antriebssteg 68 form- und/ oder reibschlüssig eingreift (vergl. Figur 7). Zur günstigen Zentrierung kann dieser Antriebssteg 68 mit an den keilförmigen Nutboden angepassten Schrägflächen ausgebildet sein.

Die ringförmige Felge 12 mit der Bereifung 13 des Vorderrades 2 läuft entsprechend frei um die feststehenden Halterungsteile 63. Hierdurch kann der nabenfreie Raum des Vorderrades 2 in vorteilhafter Weise genutzt werden, zur Anordnung beispielsweise des Antriebs. Zudem ist durch die nabenfreie Ausgestaltung eine Erhöhung des Lenkeinschlags des Vorderrades 2 ermöglicht.

Die Lenkgabel 62 ist bevorzugt starr mit einem der Halterungsteile 63 verbunden, sodass Lenkbewegungen über die Befestigung 9 über die Lenkgabel 62 auf das Vorderrad 2 übertragen werden.

Eine Federung im Bereich des Vorderrades 2 kann beispielsweise zufolge Anordnung entsprechender Federelemente zwischen der Lenkgabel 62 und dem daran befestigten Halterungsteil 63 oder weiter beispielsweise durch Ausbildung der Lenkgabel 62 als gefederte Lenkgabel erreicht sein. So können in der Lenkgabel 62 beispielsweise Wendelfedern oder Gasdruckfedern angeordnet sein. Auch können die strebenartigen Halterungsteile 63 in sich federnd ausgebildet sein, beispielsweise zufolge Anordnung konstruktiver Mittel und/ oder durch eine entsprechende Materialwahl der Halterungsteile 63. Durch eine geeignete Werkstoffpaarung bezüglich der Felge 12, insbesondere des Antriebsstegs 68 der Felge 12, und des Antriebs- und /oder Führungselements 64, 65 kann eine federnde Dämpfung auch zwischen diesen unmittelbar zusammenwirkenden Elementen erreicht werden. So können diesbezüglich federnde, nachgiebige Werkstoffe zur Anwendung kommen.

Darüber hinaus kann eine Federung des Vorderrades 2 durch eine angepasste Verbindung der Halterungsteile 63 untereinander erreicht sein. So kann beispielweise die verbindende Achse 66 in einem Langloch des einen Halterungsteils 63 oder beiden Halterungsteilen 63 relativ zu den Halterungsteilen 63 verlagerbar aufgenommen sein. Mittels Federn oder federartig wirkender Elemente ist die Achse 66 grundsätzlich in Richtung auf eine zentrierte Stellung belastet. Bei in das Vorderrad 2 einwirkenden Stößen kann das in Stoßrichtung liegende Halterungsteil 63 entlang des Langlochs und im Wesentlichen in Richtung der Stoßwirkung ausweichen. Die weiteren Halterungsteile 63 können sich angepasst ausrichten.

In einem rückwärtigen Bereich des Grundträgers 7 kann an dem Grundträger 7 eine die Lauffläche des Hinterrades 3 teilweise überdeckende schutzblechartige Abdeckung 17 vorgesehen sein.

Wie aus den Darstellungen ersichtlich, kann bezüglich des Vorderrades 2 ein gegenüber dem Hinterrad 3 größerer Durchmesser d vorgesehen. So kann der Durchmesser d des Vorderrades 2 etwa dem 1,1- bis 2-Fachen, weiter etwa dem 1,2- oder 1,6-Fachen des Durchmessers d' des Hinterrades 3 entsprechen (jeweils bezogen auf den Außendurchmesser der Bereifung 13). Gemäß einer möglichen Ausgestaltung kann so das Vorderrad 2 beispielsweise einen Durchmesser d von 28 oder 29 Zoll aufweisen, das Hinterrad 3 einen diesbezüglichen Durchmesser d' von beispielsweise 18 Zoll, weiter bevorzugt 29 Zoll (Vorderrad 2) und 24 Zoll (Hinterrad 3).

Durch das gewählte Größenverhältnis der Räder zueinander ergeben sich auch günstige Fahreigenschaften des Fahrzeuges 1. Das verhältnismäßig große Vorderrad 2 lässt günstige Kurvenneigungen zu.

Die Sitzausformung 5 weist unterseitig ein langgestrecktes Halterungsprofil 69 auf, das in einer Rohraufnahme 70 des Grundträgers 7 schiebeverlagerbar gehaltert ist. Halterungsprofil 69 und Rohraufnahme 70 nehmen dabei mit Bezug auf eine Seitenansicht relativ zu einer Längsrichtung L des Fahrzeugs 1 einen spitzen Winkel von 30 bis 60 Grad, weiter beispielsweise etwa 45 Grad, ein, dabei ausgehend von einem unteren Anbindungspunkt der Rohraufnahme 70 an dem Grundträger 7 nach hinten und oben ansteigend. Bevorzugt erstreckt sich eine geometrische Mittellinie der Rohraufnahme 70 in paralleler Ausrichtung zu der Lenkachse z.

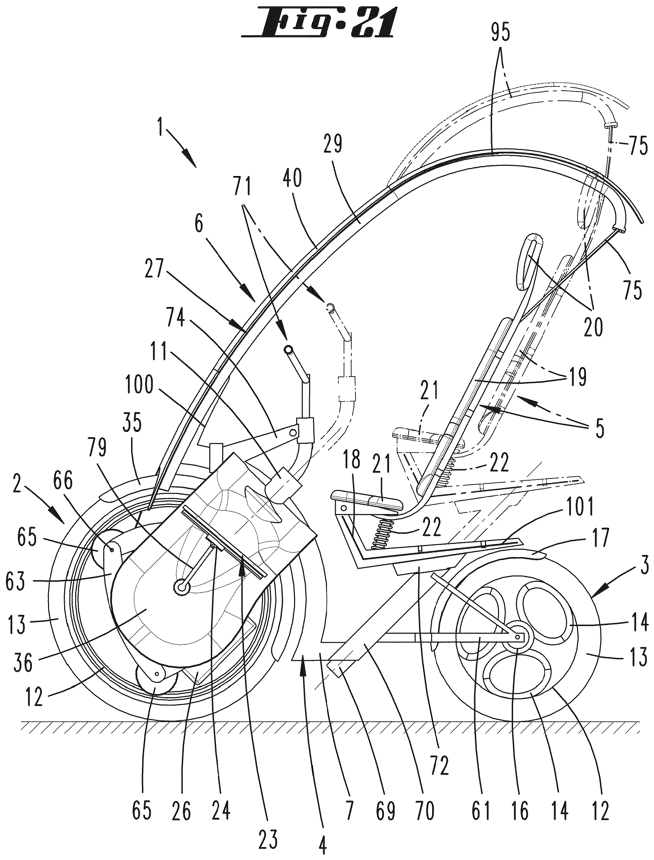

Zufolge dieser Ausgestaltung ist die Sitzausformung 5 zur ergonomischen Anpassung der Sitzhöhe insgesamt mit dem Halterungsprofil 69 in der Rohraufnahme 70 verlagerbar. Aufgrund der Verlagerung entlang einer schrägen Ebene ergibt sich mit der Verlagerung sowohl eine Änderung der Sitzhöhe relativ zum Boden als auch eine Änderung des Abstands in Längsrichtung L zu einer Lenkausbildung 71 (vergl. Figur 21).

Die gewählte Höhenstellung der Sitzausformung 5 ist bevorzugt rast- oder klemmsicherbar.

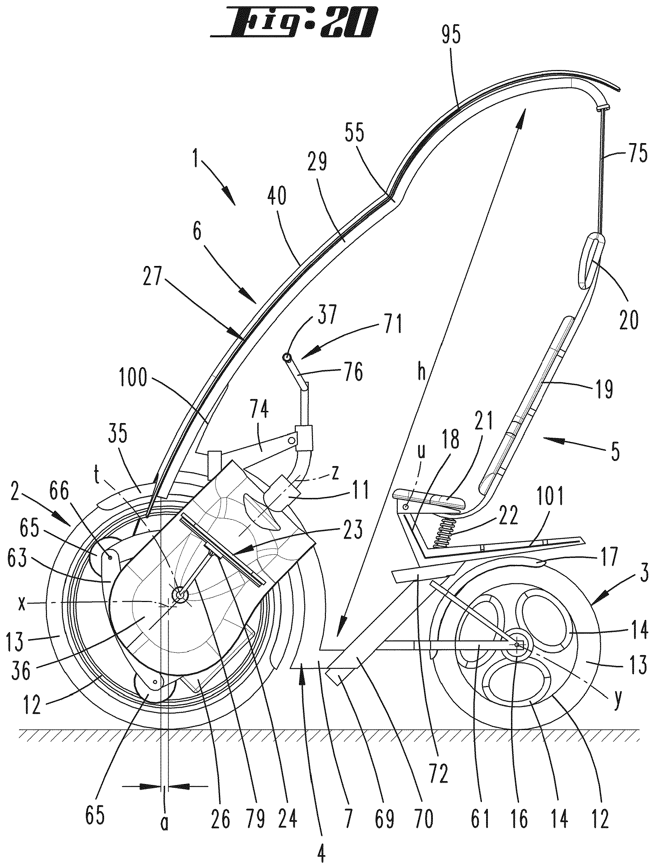

Darüber hinaus kann die Sitzausformung 5 gemäß einer möglichen Ausführungsform (vergl. Figur 20) auch im Wesentlichen in Längsrichtung L, unabhängig von der gewählten Höhenstellung über das Halterungsprofil 69, aus einer üblichen, nach vorn Richtung Vorderrad 2 gerichteten Nutzungsstellung (vergl. Beispielsweise Figur 2), in eine zu dieser üblichen Nutzungsstellung nach hinten in Richtung des Hinterrades 3 distanzierten Stellung (vergl. Figur 20) verlagert werden. Zumindest diese Endstellungen können, wie auch bevorzugt, rastsicherbar sein. In der nach hinten schiebeverlagerten Stellung der Sitzausformung 5 ist das Fahrzeug 1 üblicherweise nicht fahrbar, da der Abstand zwischen Sitzausformung 5 und Lenkerausbildung 71 sowie eines Antriebs zu groß ist.

So kann in dieser Ausweichstellung der Sitzausformung 5 eine nur durch eine berechtigte Person aufhebbare Verrieglung gegeben sein, sodass diese Ausbildung als (Teil eines) Diebstahlschutzes dienen kann.

Auch kann diese allein in Längsrichtung L des Fahrzeugs 1 ermöglichte Schiebeverlagerung der Sitzausformung 5 zum vereinfachten Einstieg beziehungsweise Ausstieg in das beziehungsweise aus dem Fahrzeug 1 genutzt werden.

Zur Ermöglichung dieser Schiebeverlagerbarkeit im Wesentlichen in Längsrichtung L des Fahrzeugs 1 kann das zur Höhenverstellung dienende Halterungsprofil beispielsweise eine Tragplatte 72 tragen, auf welcher die Sitzausformung 5 schiebeverlagerbar gehaltert sein kann.

Die Sitzausformung 5 kann eine Sitzhalterung 18 aufweisen, auf welcher ein Sitzteil 21 mit einem daran bevorzugt federnd angebundenen Rückenteil 19 angeordnet ist. Das Sitzteil 21 ist bevorzugt zusammen mit dem Rückenteil 19 gegebenenfalls anschlagbegrenzt um eine geometrische Achse u schwenkbar an der Sitzhalterung 19 gehaltert. Die geometrische Achse u kann sich dabei gleichgerichtet erstrecken zu den Radachsen x und y in einer Grundausrichtung des Fahrzeuges 1.

In üblicher Fahrtrichtung r des Fahrzeugs 1 betrachtet rückwärtig des Sitzteils 21 kann die Sitzhalterung 18 beispielweise eine Gepäckaufnahme 101 ausbilden, die sich in üblicher Ausrichtung der Sitzausformung 5 dachartig das Hinterrad 3 überspannen kann.

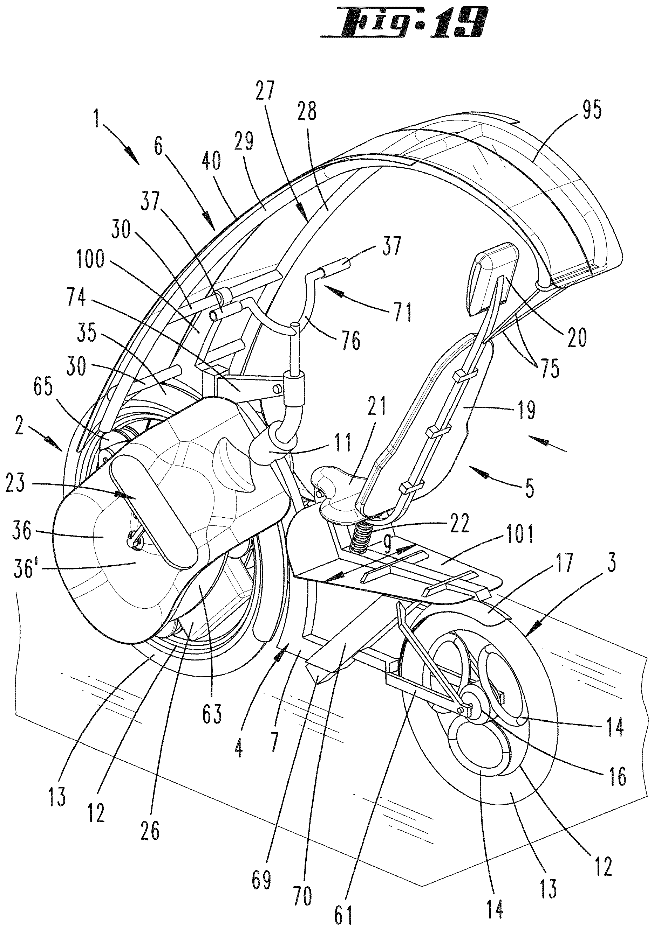

Die Gepäckaufnahme 101 kann als Spritzschutz Teil des Witterungsschutzes 6 sein, dabei eine quer zur Längsrichtung L betrachtete Breite g aufweisen, die einem Mehrfachen, beispielsweise einem 2- bis 5-Fachen, der in selber Richtung betrachteten Breite der Abdeckung 17 und/oder des Hinterrades 3 entsprechen kann. Darüber hinaus kann, wie beispielsweise auch in Figur 19 zu erkennen, die Breite g der Gepäckaufnahme 101 ausgehend von dem entgegen der üblichen Fahrtrichtung r gerichteten Ende in Richtung auf die Sitzhalterung 18 kontinuierlich zunehmen, bis hin zu einem Maß, welches dem Breitenmaß des Sitzteils 21 entsprechen oder dieses um einen Faktor von beispielsweise 1,5 bis 3 übersteigen kann.

Wie weiter aus Figur 19 ersichtlich, kann sich die Gepäckaufnahme 101 bis unter das Sitzteil 21 erstrecken und abschließend in eine schräg nach oben und in Fahrtrichtung r geneigte Abdeckung 102 übergehen, die in Fahrtrichtung r betrachtet etwa mit dem Sitzteil 21 abschließt. Auch die Abdeckung 102 kann Teil des Witterungsschutzes 6 sein.

Mit Abstand in Längsrichtung L des Fahrzeuges 2 zu der Anbindung im Bereich der Achse u kann sich die Sitzausformung 5 weiter über eine Feder 22 auf der Sitzhalterung 18, gegebenenfalls unmittelbar auf dem Grundträger 7, abstützen, womit eine stoßfedernde Ausbildung der Sitzausformung 5 erreicht sein kann (vergleiche Figur 2).

Die Verstellbarkeit der Sitzausformung 5 in Längsrichtung L des Fahrzeugs 1 und bezüglich der Sitzhöhe bietet die Anpassung der Sitzposition für den Benutzer an dessen Körpergröße, so dass dieser in der gefundenen Sitzposition ergonomisch günstig beidseitig des Vorderrades 2 in seitlicher Überdeckung zu dem Vorderrad 2 vorgesehene Fußaufnahmen 23 erreichen kann.

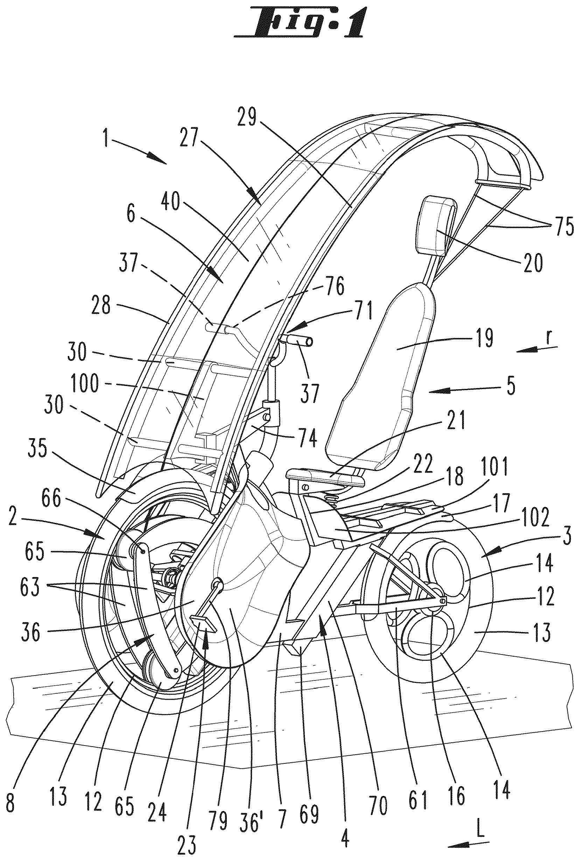

Die Fußaufnahmen 23 können gemäß der in den Figuren 1 bis 9 dargestellten Ausführungsform durch Tretpedale 24 gegeben sein. Diese sind beidseitig des Vorderrades 2 an einem rahmenfesten Gestell 73 gelagert derart, dass diese bei entsprechender Betätigung um eine bei üblicher Geradeausfahrt im Wesentlichen parallel zur Vorderradachse x ausgerichteten Tretkurbelachse t kurbelartig bewegt werden können.

Die Tretkurbelachse t kann zur Erhöhung der Bodenfreiheit, insbesondere bei Kurvenfahrten, entlang der Lenkachse z in Richtung auf die Lenkausbildung 71 um ein Versatzmaß e versetzt sein (siehe Figur 6), welches Versatzmaß e beispielweise etwa 30 bis 70 mm, weiter beispielsweise etwa 40 bis 50 mm betragen kann.

Es ist ein Antrieb des Fahrzeuges 1 allein oder jedenfalls auch durch Muskelkraft vorgesehen.

Bei einem üblichen Kurbelantrieb gemäß der ersten Ausführungsform ist die als Tretpedal 24 ausgebildete Fußaufnahme 23 über einen Verlagerungsweg W entlang einer Kreisbahn mit einem Mittelpunkt in der Tretkurbelachse t gegeben. Die Verlagerungswege W der beidseitig des Vorderrades 2 angeordneten Tretpedale 24 erstrecken sich in parallel zueinander ausgerichtete Verlagerungsebenen K, welche Verlagerungsebenen K bevorzugt unabhängig von der Lenkstellung des Vorderrades 2 stets parallel ausgerichtet sind zu einer vertikalen Längsmittelebene E des Fahrzeugs 1, beziehungsweise raumparallel zu dem bei dieser Ausführungsform nicht lenkbaren Hinterrad 3.

Die Lagerung der Fußaufnahmen 23 kann entsprechend rahmenfest gegeben sein.

Entsprechend verläuft eine Ebene R, in der sich das Vorderrad 2 erstreckt, abhängig von der Lenkstellung des Vorderrades 2 unterschiedlich zu den Verlagerungswegen W der Fußaufnahmen 23 beziehungsweise zu den Verlagerungsebenen K (vergl. Figur 8). Unabhängig vom Lenkeinschlag verbleiben die die Fußaufnahmen 23 beaufschlagenen Beine des Benutzers in ihren zueinander etwa parallelen, ergonomisch günstigen Ausrichtungen.

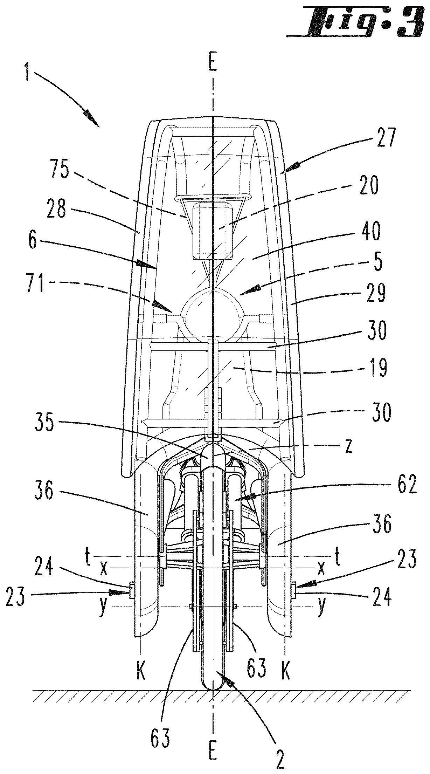

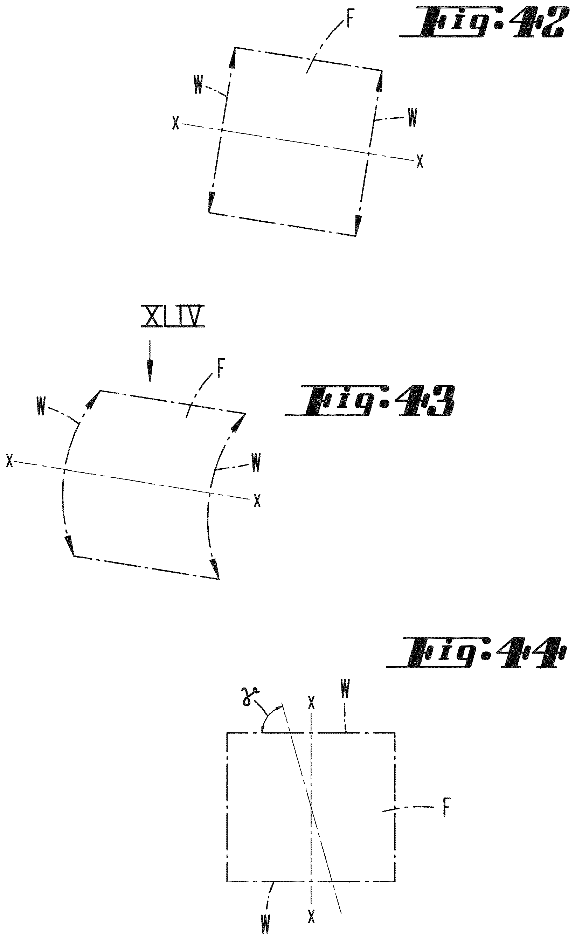

Dabei kann weiter die geometrische Vorderradachse x, die sich im üblichen Nutzungszustand beispielsweise gemäß Figur 3 im Wesentlichen horizontal erstreckt, abhängig von der Lenkstellung des Vorderrades 2 mit einer durch die beiden Verlagerungswege W beider Tretpedale 24 aufgespannten Ebene beziehungsweise Fläche F unterschiedliche Schnittwinkel γ einnehmen (vergleiche schematische Darstellungen in den Figuren 42 bis 44). Dabei spannen linear verlaufende Verlagerungswege W eine ebene Fläche F auf, gekrümmt verlaufende Verlagerungswege W entsprechend der schematischen Darstellung in Figur 43 eine gekrümmte Fläche F. Bei einem bekannten Kurbelantrieb gemäß der Ausführungsform in den Figuren 1 bis 9 ergibt sich jeweils ein kreisförmiger Verlagerungsweg W, sodass sich entsprechend eine kreiszylindrische Hüllfläche aufspannt.

Wie weiter insbesondere aus der Darstellung in Figur 8 zu erkennen, können die Fußaufnahmen 23 beziehungsweise Tretpedale 24 in Erstreckungsrichtung der Tretkurbelachse t soweit zueinander distanziert angeordnet sein, dass das Vorderrad 2 aus einer Geradeausstellung, in welcher die Ebene R des Vorderrades 2 mit der Längsmittelebene E des Fahrzeugs 1 zusammenfallen kann, heraus in beiden Lenkrichtungen einen maximalen Lenkeinschlag mit einem Winkel δ von jeweils etwa 30 bis 60 Grad, weiter bevorzugt etwa 40 Grad, zu der Längsmittelebene E einnehmen kann, ohne dass das Vorderrad 2 mit rahmenfesten Teilen, mit Teilen des Witterungsschutzes 6 und/oder den Fußaufnahmen 23 kollidiert. Bevorzugt sind dabei die maximalen Lenkeinschläge anschlagbegrenzt.

Die Tretpedale 24 wirken über drehbar angeordnete Kurbeln 79 auf eine, die Tretkurbelachse t zentral aufnehmende Übertragungswelle 77. Diese ist an den beidseitig des Vorderrades 2 vorgesehenen Abschnitten des Gestells 73 drehgelagert.

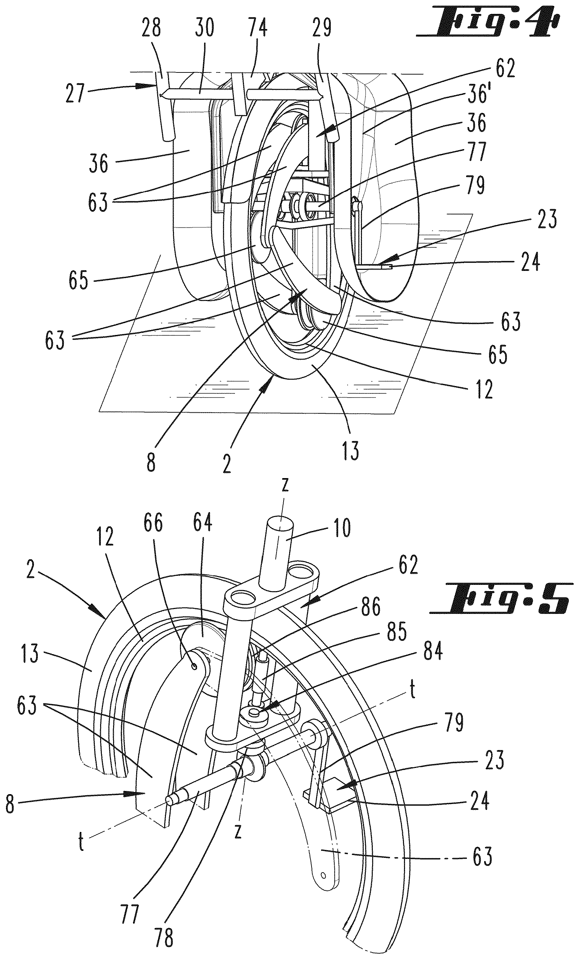

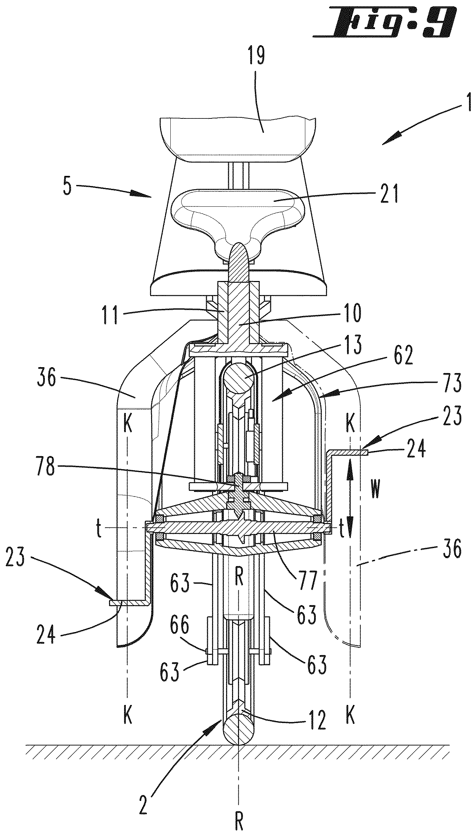

Die Übertragungswelle 77 wirkt weiter getriebemäßig zusammen mit einer in der Lenkachse z verlaufenden Abtriebswelle 78, die in Art einer Königswelle widerum getriebemäßig mit dem rollenartigen Antriebselement 64 zusammenwirkt (vergl. Figuren 5 und 9).

Die Übertragung zwischen Abtriebswelle 78 und Antriebselement 64 kann zufolge einer Reib- oder Formschlußverbindung, beispielsweise Zahnradverbindung, erreicht sein. So kann weiter die Abtriebswelle 78 endseitig beispielsweise als Schneckenwelle ausgebildet sein, zur Zusammenwirkung mit einem an dem Antriebselement 64 ausgebildeten Schneckenrad (vergl. Figur 5).

Alternativ kann eine Übertragung der Verlagerungsbewegung der Tretpedale 24 beispielsweise auch über eine Gelenk-Kardanwelle auf eine in der Lenkachse z ausgerichtete Königswelle erreicht sein.

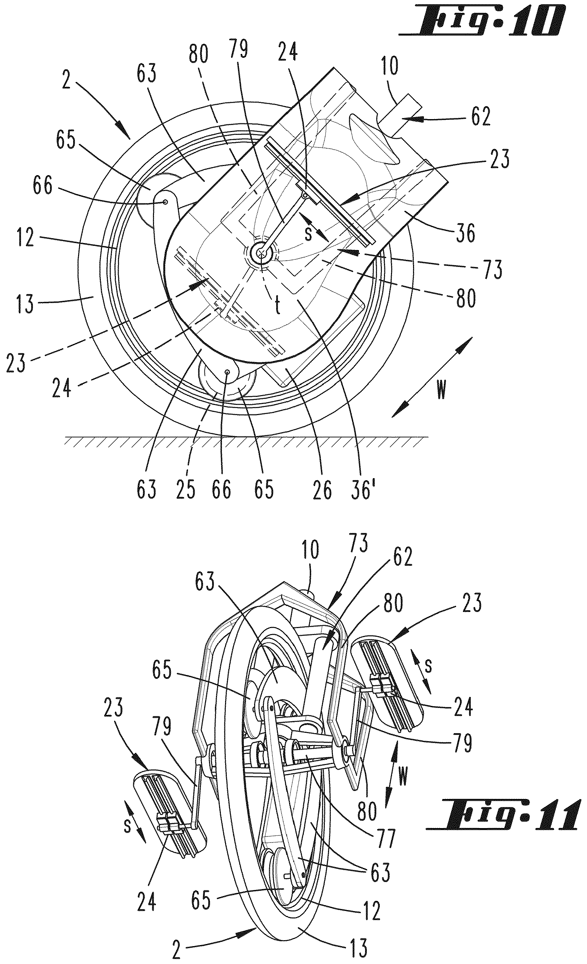

Einen alternativen Kurbelantrieb zeigen die Figuren 10 und 11. Die Tretkurbeln 24 sind dabei unterseitig plattenförmiger Fußaufnahmen 23 angeordnet und im Wesentlichen in Ausrichtung der Längsmittelebene E an der jeweiligen Fußaufnahme 23 schienenartig geführt verlagerbar (vergl. Pfeil s in Figur 11).

Die plattenförmigen Fußaufnahmen 23 sind an gestellseitigen, im Wesentlichen in Ausrichtung der Lenkachse z verlaufende Führungsstangen 80 linear geführt, sodass sich für den Benutzer ein linearer Verlagerungsweg W innerhalb der Verlagerungsebene K ergibt.

Zufolge dieser Ausbildung wird eine translatorische Bewegung der Fußaufnahmen 23 in eine Rotationsbewegung der an den Tretpedalen 24 angeordneten Kurbeln 79 und über diese der Übertragungswelle 77 umgesetzt.

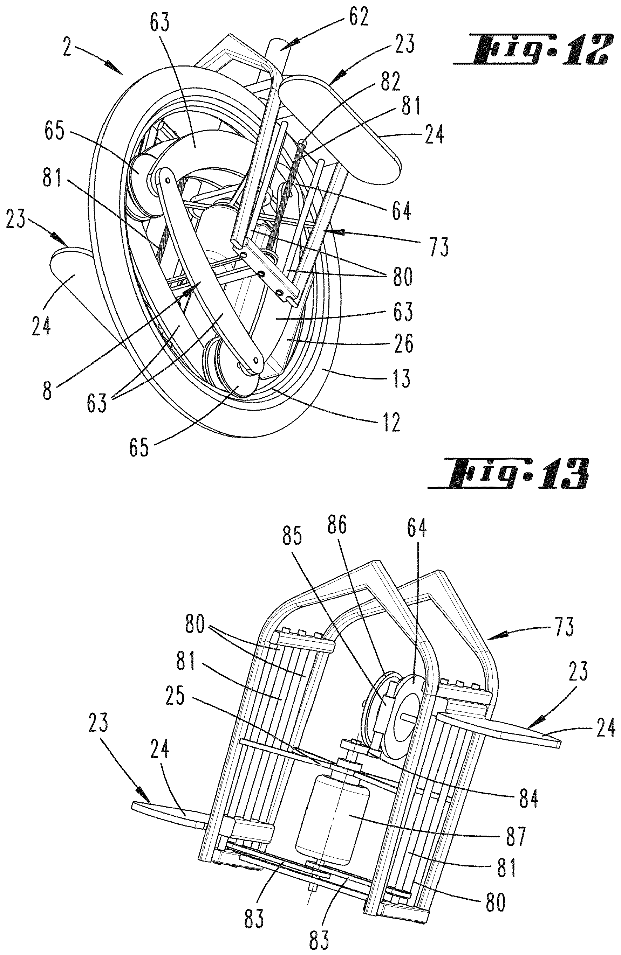

Die Figuren 12 und 13 zeigen eine weitere Ausführungsform des Antriebs über Muskelkraft, bei der die Tretpedale 24 der Fußaufnahmen 23 jeweils einen linearen Verlagerungsweg W im Wesentlichen in paralleler Ausrichtung zur Lenkachse z aufweisen.

Hierzu sind die plattenförmigen Tretpedale 24 an dem Gestell 73 entlang von Führungsstangen 80 geführt. Zwischen den Führungsstangen 80 ist bevorzugt eine in Achsrichtung feststehende, jedoch um deren Längsachse drehbare Spindel 81 mit einem bevorzugten Steilgewinde vorgesehen, die über eine an dem Tretpedal 24 befestigte Schraubmutter 82 im Zuge der linearen Bewegung des Tretpedals 24 antreibbar ist. Die Spindel 81 durchsetzt dabei die Schraubmutter 82 im Zuge der Pedalbewegung. Zufolge dieser Ausbildung wird eine translatorische Bewegung der Tretpedale 24 in eine Rotationsbewegung der Spindel 81 umgesetzt.

Eine getriebemäßige Kopplung der Spindel 81 mit der Abtriebswelle 78 ist über Übertragungsmittel 83 gegeben, die jeweils einerseits an der Spindel 81 angreifen und andererseits an der Abtriebswelle 78. Diese Übertragungsmittel 83 können, wie beispielhaft dargestellt, Zahnriemen sein, alternativ Ketten, Seile oder Riemen (vergl. Figuren 12 und 13).

Die Übertragungsmittel 83 wirken bevorzugt mittelbar unter Zwischenschaltung beispielsweise einer Nabenschaltung 87 und /oder einer Getriebestufe 84 mit bevorzugter Freilaufschaltung.

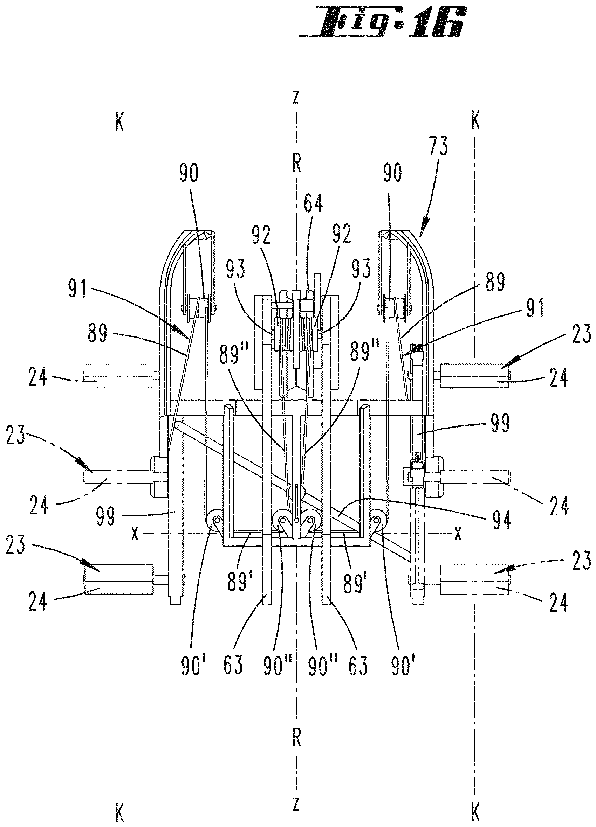

Die Tretpedale 24 beider Seiten können zur Synchronisation der Verlagerungsbewegungen beispielsweise über eine, den nabenfreien Bereich des Vorderrades 2 durchsetzende Wippe 94 miteinander gekoppelt sein (vergl. Figur 16), welche Wippe 94 weiter beispielsweise über Kugelkopfausbildungen an den Tretpedalen 24 angebunden sein kann.

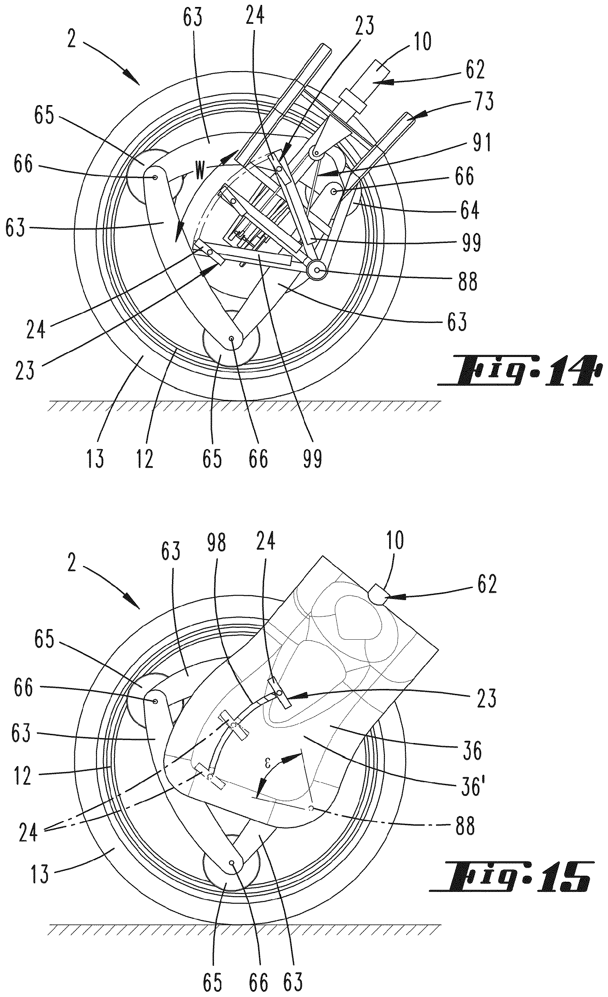

Auch können die Tretpedale 24 in Art eines Schwenkpedals an einem Hebel 99 angeordnet und jeweils in der Verlagerungsebene K entlang eines kreisbahnförmigen Verlagerungsweges W verlagerbar sein (vergl. weitere Ausführungsform in den Figuren 14 bis 18), wozu die Tretpedale 24 beziehungsweise die Hebel 99 um gestellseitig festgelegte, parallel zu den Achsen 66 der Antriebs- und/oder Führungselemente 64, 65 verlaufende Achsen 88 schwenkbeweglich gelagert sind. Es ergibt sich ein vergleichsweise großer Hebelarm von bis 200 bis 300 mm, bevorzugt etwa 240 mm. Dabei kann sich ein Verlagerungs-Schwenkwinkel ε von beispielsweise 40 bis 75 Grad ergeben. Als ergonomisch günstig erweist sich ein Schwenkwinkel ε von etwa 60 Grad.

Jedes Tretpedale 24 ist über eine Anlenkachse an dem zugeordneten Hebel 99 im Bereich des der Achse 88 abgewandten Ende relativ zu dem Hebel 99 schwenkbar gelagert, wobei die Anlenkachse einen bogenförmig verlaufenden Schlitz 98 in dem Witterungsschutzteil 36 durchsetzen kann, sodass allein die Tretpedale 24 zur Bedienung nach außen vortreten.

Die bei Betätigung ausgelöste Pedalbewegung wird bevorzugt über einen, insbesondere ein Seil 89 und Umlenkrollen 90 aufweisenden Seilzug 91 auf das Antriebselement 64 übertragen. Je Seite beziehungsweise je Tretpedal 24 kann ein Seil 89 vorgesehen sein. Alternativ, wie weiter auch bevorzugt, können auch beispielweise zwei Seile 89 je Tretpedal 24 die Kraftübertragung übernehmen.

Bei einer möglichen Anordnung eines Elektromotors 25 zur Unterstützung des Antriebs über Muskelkraft, welcher Elektromotor 25 beispielsweise im nabenfreien Bereich des Vorderrades 2 angeordnet sein kann, kann zur Steuerung des Elektromotors 25 in dem Seil 89 und/ oder an einer Halterung einer der Umlenkrollen 90 ein Zugsensor, beispielsweise in Form eines DMS, vorgesehen sein.

Der Elektromotor 25 kann beispielsweise, wie in Figur 6 angedeutet, in oder an dem bodenseitig vorgesehenen als Stützrad ausgebildeten Führungselement 65 angeordnet sein beziehungsweise dieses antreiben.

Von dem Tretpedal 24 führt das endseitig dort angebundene Seil 89 zunächst in einen oberen Bereich des Gestells 73, in welchem eine Umlenkrolle 90 mit einer raumparallel zur Tretpedal-Achse 88 verlaufenden geometrischen Drehachse. Das Seil 89 ist über diese obere Umlenkrolle 90 geführt und nach unten in Richtung Vorderradachse x gerichtet.

Die Umlenkrolle 90 kann auf deren Achse 93 zusätzlich zu ihrer freien Drehbarkeit um die Achse 93 beidseitig anschlagbegrenzt linear beweglich sein.

Zugeordnet der geometrischen Vorderradachse x sind je Seite zwei weitere, in Erstreckungsrichtung der Achse 93 der Umlenkrolle 90 distanziert angeordnete Umlenkrollen 90' und 90" vorgesehen, mit geometrischen Drehachsen, die im Wesentlichen parallel zur Längsmittelebene E ausgerichtet sind. Über diese weiteren Umlenkrollen 90' und 90" wird insgesamt eine Umlenkung des Seils 89 um im Wesentlichen etwa 180 Grad erreicht, so dass sich das Seil nach Umlenkung an der Umlenkrolle 90" nach oben gerichtet erstreckt.

Die etwa horizontal sich erstreckende Seiltangente 89' zwischen den Umlenkrollen 90' und 90" verläuft - mit Bezug auf eine Ausrichtung der Vorderrad-Ebene R in Richtung der Längsmittelebene E des Fahrzeug 1 - bevorzugt entlang der Vorderradachse x, gegebenenfalls mit einem geringen Abstand von beispielsweise bis zu 20 mm.

Während die Umlenkrollen 90, 90' und 90" eines Seilzugs 91 bevorzugt gestellseitig und somit rahmenfest angeordnet sind, ist eine diesem Seilzug 91 zugeordnete Seilwickelrolle 92, an welcher das dem Tretpedal 24 abgewandte Ende des Seils 89 befestigt ist, radseitig festgelegt, beispielsweise an der Lenkgabel 62 oder an einem der Halterungsteile 63. Die Drehachse 93 der Seilwickelrolle 92 ist parallel ausgerichtet zur Vorderradachse x. Die Seilwickelrollen 92 beider Seilzüge 91 des Antriebs schwenken entsprechend mit dem Vorderrad 2 bei Lenkeinschlag um die Lenkachse z.

Der sich zwischen Umlenkrolle 90" und Seilwickelrolle 92 sich etwa vertikal erstreckende Seiltangente 89" ist bevorzugt in oder nahe der Lenkachse z, beispielsweise mit einem maximalen horizontalen Abstand von bis 30 oder 50 mm, weiter bevorzugt etwa 10 bis 20 mm, geführt, um nur eine geringe Bewegung des Seils 89 in einer Querrichtung zu dessen Längserstreckung bei Lenkbewegungen des Vorderrades 2 zuzulassen.

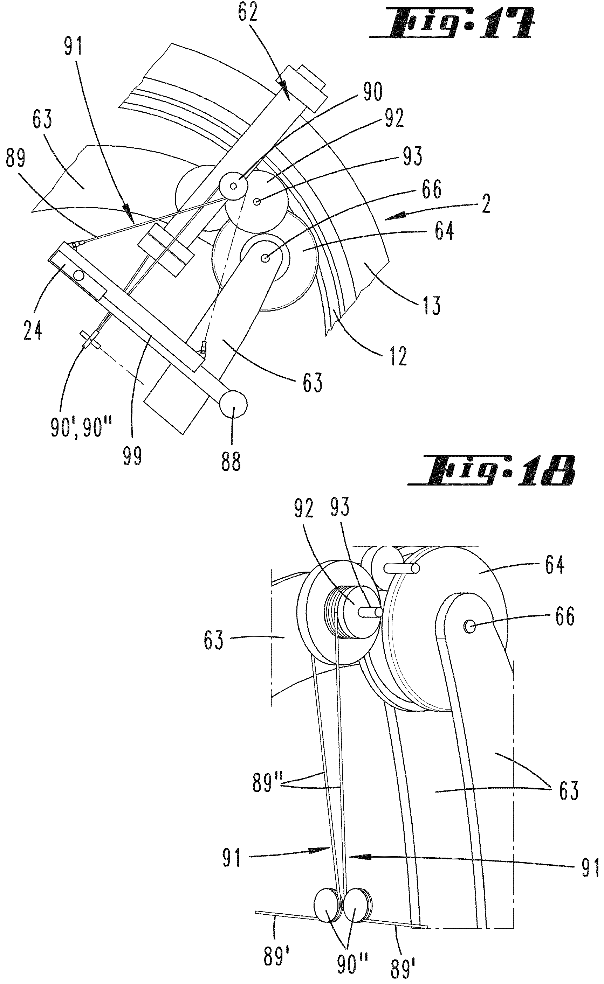

Wie insbesondere aus der Darstellung in Figur 18 zu erkennen, kann zwischen den Seilwickelrollen 92 und dem Antriebselement 64 eine Getriebestufe 84 vorgesehen sein. Die Seilwickelrollen 92 sind bevorzugt einem Freilauf, weiter bevorzugt mit einem doppelten Freilauf, versehen, wie auch bevorzugt mit einem gefederten Rücklauf. Der doppelte Freilauf bietet beispielsweise die Möglichkeit des Rückwärtsschiebens des Fahrzeugs 1 ohne Einschränkungen beziehungsweise Beschädigung.

Alternativ ist ein Direktantrieb des Antriebselements 64 über die Seilwickelrollen 92 möglich.

Auch können bei dieser Ausführungsform die Tretpedale 24 über eine den nabenfreien Bereich des Vorderrades 2 durchsetzende, in ihrer Längserstreckung bevorzugt mittig gelagerte Wippe 94 miteinander gekoppelt sein. Über diese Wippe 94 wird sichergestellt, dass die Tretpedale 24 wieder in ihre Ausgangslage verbracht werden. Es findet bei Betätigung eine gekoppelte, gegenläufige Bewegung statt.

Die Befestigung des dem Tretpedal 24 zugewandten Seilendes kann mit einer Überlastsicherung versehen sein.

Darüber hinaus kann, wie schematisch in Figur 17 dargestellt, durch Änderung des Befestigungspunkts des Seilendes (strichpunktierte Darstellung) an dem Tretpedal 24 die Übersetzung bis zu 500% geändert werden. Diesbezüglich kann eine gestufte oder auch stufenlose Übersetzung gegeben sein.

Im nabenfreien Bereich des Vorderrades 2 kann ein Getriebe vorgesehen sein, darüber hinaus aber auch, wie insbesondere bevorzugt, ein Elektromotor 25 zur Unterstützung der bei Pedalbetätigung aufgebrachten Muskelkraft. In weiterer Ausgestaltung können auch bis zu drei Elektromotoren 25 vorgesehen sein, beispielsweise jeweils einem Antriebs- und/ oder Führungselement 64, 65 zugeordnet. So kann ein Führungselement 65 unmittelbar oder mittelbar durch einen Elektromotor 25 antreibbar sein (vergleiche schematische Darstellung in Figur 6).

Der Elektromotor 25 kann unmittelbar ein Übersetzungsgetriebe aufweisen oder weiter beispielsweise insbesondere innerhalb des nabenfreien Bereichs des Vorderrades 2 mit einem solchen Getriebe zusammenwirken. Dabei kann weiter eine Antriebs-Kombination aus Tretpedalen 24, Getriebe und Elektromotor 25 gegeben sein. Eine solche Antriebs-Kombination kann, wie auch bevorzugt, im nabenfreien Bereich des Vorderrades 2 vorgesehen sein.

Die Energieversorgung des Elektromotors 25 erfolgt bevorzugt über einen Akkumulator 26. Dieser kann ebenfalls innerhalb des nabenfreien Vorderrades 2, beispielsweise festgelegt an einem Halterungsteil 63, angeordnet sein.

Auch kann der Akkumulator 26 alternativ, in üblicher Fahrtrichtung r betrachtet, beispielsweise hinter der Sitzausformung 5 an dem Längsträger 7 befestigt sein. Auch eine Anordnung des Akkumulators 26 unterhalb der Sitzausformung 5 kann vorgesehen sein.

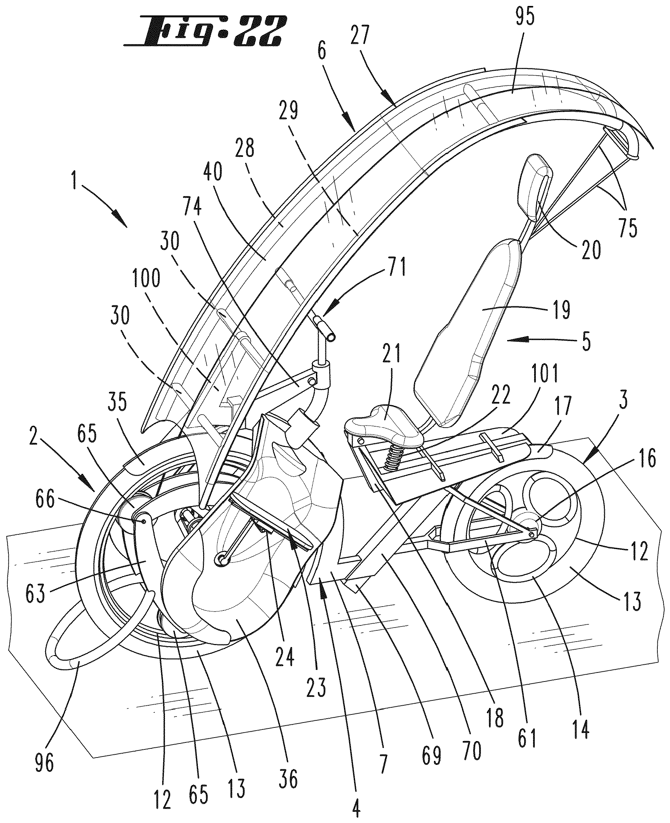

Wie insbesondere auch aus den Darstellungen in den Figuren 1 bis 3 sowie 19 bis 23 zu erkennen, ist weiter eine Rahmenkonstruktion 27 als Teil des Rahmens 4 vorgesehen. Hierbei kann es sich, wie auch dargestellt, um zwei bogenförmig gestaltete, quer zur Längsrichtung L des Fahrzeuges 1 zueinander beabstandet vorgesehene Rohrbögen handeln, die mit Bezug auf eine Seitenansicht gemäß Figur 2 bei einer Projektion in eine gemeinsame Vertikalfläche in Überdeckung liegen können.

Die bogenförmigen Rahmenteile 28 und 29 der Rahmenkonstruktion 27 können, wie auch bevorzugt, über Querträger 30 miteinander verbunden sein. Diese Querträger 30 können weiter, wie auch bevorzugt, in einem dem Vorderrad 2 zugewandten Abschnitt der Rahmenkonstruktion 27 vorgesehen sein, wobei die Querträger 30 entsprechend den Abstand der Rahmenteile 28 und 29 im Vorderradbereich definieren.

Die Querträger 30 können weiter, wie bevorzugt, zur Festlegung der Rahmenkonstruktion 27 am Rahmen 4 dienen. Ein hierzu vorgesehener Träger 74 ist einerends mit mindestens einem Querträger 30 verbunden und anderenends an einem, die Lenkausbildung 71 aufnehmenden Ausleger der Gabelaufnahme 11 befestigt. Es ergibt sich entsprechend vorderseitig eine im Wesentlichen starre Anbindung der Rahmenkonstruktion 27 an dem Rahmen 4.

Die Rahmenteile 28 und 29 der Rahmenkonstruktion 27 erstrecken sich vorderradseitig jeweils seitlich das Vorderrad 2 teilweise flankierend und enden frei, d. h. ohne Befestigung im Bereich des Vorderrades 2 mit einem Abstand a in üblicher Fahrtrichtung r vor der Vorderradachse x. Von diesem Ende ausgehend, verläuft jedes Rahmenteil 28, 29 gekrümmt nach oben und nach hinten im Wesentlichen in Richtung auf das Hinterrad 3, hierbei die Sitzausformung 5 mit Abstand überspannend, wobei sich in einem die Sitzausformung 5 unmittelbar überspannenden Bereich gegebenenfalls ein verringerter Krümmungsradius einstellen kann.

Der Witterungsschutz 6 insbesondere in dem die Sitzausformung 5 überspannenden Bereich kann, wie auch bevorzugt, aerodynamisch günstig geformt sein, beispielsweise im Querschnitt gewölbt oder gepfeilt.

Rückwärtig kann der dachartige Abschnitt 95 der Rahmenkonstruktion 27 über Spannseile 75 an der Sitzausformung 5, insbesondere an dem Rückenteil 19 befestigt und so gegen die Sitzausformung 5 abgespannt sein.

Der Träger 74 kann darüber hinaus ein zwischen der Lauffläche des Vorderrades 2 und der dem Vorderrad 2 zugewandten Bereich des Rahmens 4 angeordnete schutzblechartige Abdeckung 35 tragen. Bevorzugt ist diese Abdeckung 35 ergänzt um wangenartig das Vorderrad 2 partiell, insbesondere in einem oberen und hinteren Bereich des Vorderrades 2 abdeckende Witterungsschutzteile 36, die bevorzugt ebenfalls an dem Träger 74 befestigt sein können.

Die Lenkung des Vorderrades 2 kann in üblicher Weise ähnlich der Lenkung eines Fahrrades erfolgen. Hierzu kann die Lenkerausbildung 71 eine Lenkstange 76 - alternativ ein Lenkrad - aufweisen, die drehfest mit der Lenkgabel 62 verbunden sein kann. Beispielweise über griffartige Bedienelemente 37 können Steuerbefehle in elektronischer Form, beispielsweise über Funk, alternativ aber auch über Kabel, übertragen werden, beispielsweise zur Steuerung des Elektromotors 25.

Wie beispielsweise aus Figur 2 ersichtlich, bildet die Lenkachse z nicht zwingend zugleich die Lenkerachse der Lenkstange 76. Vielmehr kann diese Lenkerachse v beispielsweise in einem spitzen Winkel zur Lenkachse z verlaufen, weiter beispielsweise in üblicher Nutzungsstellung etwa senkrecht.

Auch kann alternativ die Lenkausbildung allein durch beispielsweise an der Rahmenkonstruktion 27 befestigte Bedienelemente 37, weiter beispielsweise im Wesentlichen in Art von stickartigen Steuerelementen (Joy-Stick) ausgebildet sein, über welche Steuerbefehle in elektronischer Formübertragen werden können.

Über die Bedienelemente 37 können weiter beispielsweise Bremsbefehle ausgeführt werden, bevorzugt getrennt für das Vorderrad 2 und das Hinterrad 3. Auch kann über die Bedienelemente 37 eine Steuerung des unterstützen-den Elektromotors 25 erreicht werden. Dabei weisen die Bedienelemente 37, beispielsweise bei einer Ausbildung als joy-stickartige Bedienelemente, eine ausreichende Stabilität auf, um auch Stützkräfte, wie diese beispielsweise beim Pedaltreten auftreten, aufnehmen zu können.

In weiterer Ausgestaltung kann über die Bedienelemente 37 auch eine Lenkung, entsprechend eine Lenksteuerung des Vorderrades 2 erfolgen.

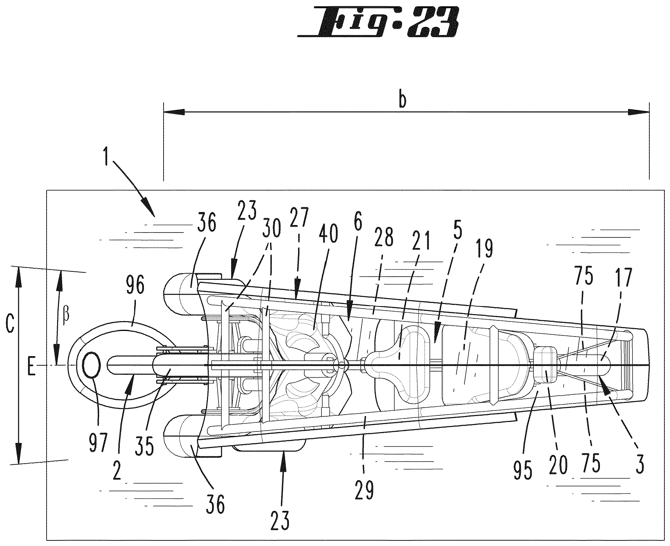

Wie weiter beispielsweise aus der Draufsicht in Figur 23 zu erkennen, kann sich in Längsrichtung L des Fahrzeuges 1 betrachtet eine insgesamt etwa keilförmige Grundrisskontur ergeben , dies insbesondere bedingt durch eine ausgehend von der Anbindung der Rahmenteile 28 und 29 an der Sitzausformung 5 in üblicher Fahrtrichtung r divergierende Anordnung der Rahmenteile 28 und 29, die jeweils zu der vertikalen Längsmittelebene E des Fahrzeugs 1 einen spitzen Winkel β von beispielsweise 5 bis 15 Grad, weiter beispielsweise etwa 10 Grad einschließen können.

Der erwähnte Witterungsschutz 6 kann sich gewölbt plattenförmig entlang eines wesentlichen Abschnitts der Rahmenkonstruktion 27 erstrecken. Der Witterungsschutz 6 kann sich dabei zunächst, ausgehend von einem Deckenbereich der Rahmenkonstruktion 27, bis zu dem Vorderrad 2 erstrecken, kann dabei weiter an der Rahmenkonstruktion 27 befestigt sein.

Dieser Abschnitt 40 des Witterungsschutzes 6 kann in vorteilhafter Weise insbesondere im üblichen Sichtbereich transparent gestaltet sein.

Während die Rahmenkonstruktion 27 bevorzugt aus einem Metall oder Verbundwerkstoff besteht und den das Fahrzeug 1 benutzenden Fahrer überrollbügelartig schützt, kann der Witterungsschutz 6 in weiterer Ausgestaltung beispielsweise aus einem Kunststoffmaterial, Kunststoff-Verbundmaterial, Holz und/oder Bambus hergestellt sein.

Der Abschnitt 40 des Witterungsschutzes 6 kann gegebenenfalls dichtend übergehen in die wangenförmigen Witterungsschutzteile 36 und die Abdeckung 35, so dass das Vorderrad 2 hin zu der Sitzausformung 5 im Wesentlichen gekapselt ist.

Weiter kann sich der Witterungsschutz 6, insbesondere die Witterungsschutzteile 36, über das vorderradseitige Ende der Rahmenkonstruktion 27 hinaus bis unter die Fußaufnahme 23 beziehungsweise die Tretpedale 24 erstrecken, so dass die Fußaufnahme 23 beziehungsweise die Tretpedale 24 über den gesamten Verlagerungsweg W von dem Witterungsschutz 6 auch untergriffen sein können.

Der Witterungsschutzes 6 mit den Witterungsschutzteilen 36 bieten einen günstigen Schutz des Fahrers gegen Spritzwasser auf beispielsweise regennasser Fahrbahn, sowie darüber hinaus der Abschnitt 40 des Witterungsschutzes 6 einen günstigen Schutz gegen Regen usw.

In einer weiter möglichen Ausgestaltung kann das Fahrzeug 1 auch rückwärtig im Bereich der rahmenteilseitigen Rückenabschnitte 31 mit einem Witterungsschutz versehen sein.

Insbesondere der Abschnitt 40 des Witterungsschutzes 6 kann etwa auf Kopfhöhe eines auf dem Sitzteil 21 sitzenden Benutzers ein Gelenk oder einen flexiblen Bereich 55 aufweisen. Hierdurch ist eine Verschwenkung des dachseitigen Abschnitts relativ zu dem starr mit dem Rahmen 4 verbundenen Abschnitts 40 ermöglicht. Dieses bietet die Möglichkeit einer kombinierten Höhenverstellung des Dachabschnitts 95 zusammen mit der Höhenverstellung der Sitzausformung 5 (vergl. Figur 20).

Eine Veränderung der Position der Sitzausformung 5 kann entsprechend zu einer Anpassung der Fahrzeughöhe h führen, wobei eine Verlagerung der Sitzausformung.

Auch kann der Abschnitt 40, gegebenenfalls zusammen mit dem Dachabschnitt 95, von der Rahmenkonstruktion 27 entfernt werden, beispielsweise durch Lösen der Spannseile 75 an der Sitzausformung 5 und einer bevorzugt als Schnellverschluss ausgebildeten Verbindung 100 an dem Träger 74.

Wie weiter beispielsweise aus der Draufsicht in Figur 23 zu erkennen, kann sich insgesamt eine Länge b des Fahrzeuges 1 ergeben, die etwa dem 3-bis 5-Fachen, weiter etwa dem 3,5- bis 4-Fachen der quer hierzu betrachteten Breite c entsprechen kann. So kann weiter beispielsweise eine Länge b von 150 bis 200 cm, weiter beispielsweise 180 cm gegeben sein, bei einer Breite c von beispielsweise 40 bis 70 cm, weiter beispielsweise etwa 55 cm. Hieraus kann sich weiter eine günstige Parkfläche ergeben, die 1 m² oder weniger entsprechen kann.

Zur (weiteren) Diebstahlsicherung kann gabelfest, dem Vorderrad 2 zugeordnet, ein Bügel 96 vorgesehen sein, der bevorzugt nur zerstörend lösbar mit der Lenkgabel 62 beziehungsweise mit dem Vorderrad 2 verbunden ist.

Der Bügel 96 kann beispielsweise zur Sicherung des Fahrzeugs 1 an einem Bodenanker 97 dienen. Hierzu kann der Bügel 96 weiter eine nur durch eine berechtigte Person beispielsweise mittels Schlüssel oder Code ver- und entriegelbare Öffnung aufweisen.

In vorteilhafter Weise kann der Bügel 96 an einem Halterungsteil 63 des Vorderrades 2 befestigt sein, gegebenenfalls dabei auch den Akkumulator 26 sichernd.

Bei Ausbildung des Bügels 96 mit einer elektrischen Leitung kann der Bügel 96 auch zum Anschluss des Fahrzeugs 1, insbesondere des Akkumulators 26, an eine Ladestation genutzt werden.

Zusätzlich zu dem Bügel 96 kann zur Diebstahlsicherung die Sitzausformung 5, wie beschrieben, in der hinteren Position verriegelt sein. Darüber hinaus kann zusätzlich oder alternativ eine elektronische Wegfahrsperre vorgesehen sein.

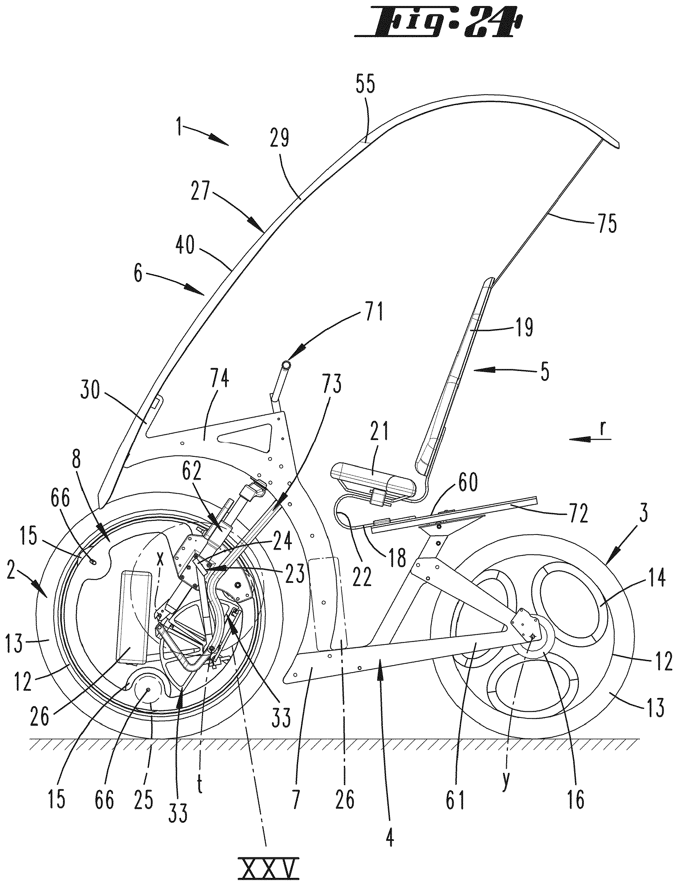

Die Figur 24 zeigt in weiterer Ausführungsform ein fahrradartiges Fahrzeug 1.

Das vorderradseitige Stützteil 8, zur Ausbildung des Vorderrads 2 als nabenfreies Rad, ist im Unterschied zu dem vorbeschriebenen Ausführungsbeispiel als ein im Wesentlichen in Umfangsrichtung des Rades einstückiges Element ausgebildet, dabei bevorzugt sich im Wesentlichen mit Bezug zu der geometrischen Vorderradachse x kreisringförmig sich etwa über einen Winkel von 300 bis 330 Grad erstreckend. Die Ringform des Stützteils 8 kann, wie auch bevorzugt, geschlossen sein durch einen die Enden des Stützteils 8 verbindenden Grundträger 31 einer Getriebeausformung 32.

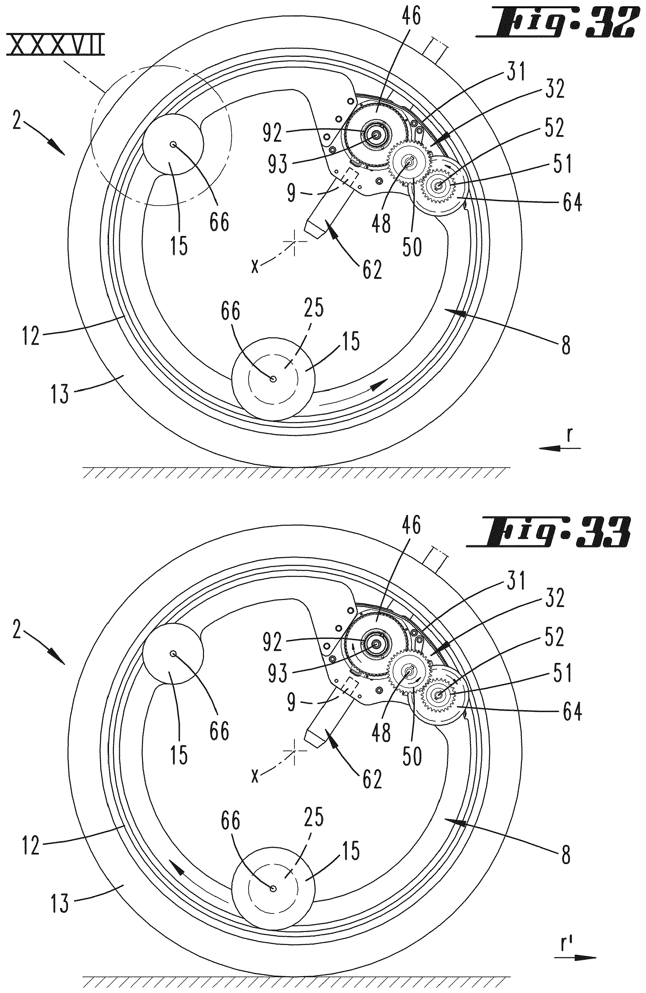

An dem ringförmigen Stützteil 8 ist mit Bezug auf eine Seitenansicht gemäß Figur 24 oder auch gemäß Figur 32 unten, der Abrollfläche, auf welcher das Vorderrad 2 abläuft, zugeordnet, so weiter mit Bezug auf die Darstellung etwa auf einer Position zwischen 6:00 und 7:00 Uhr, ein Stützrad 15 drehbar befestigt. Dieses Stützrad 15 kann ausgelegt sein zur motorischen Unterstützung über einen Elektromotor 25.

Weiter mit Bezug beispielsweise zu Figur 32 ist etwa zugeordnet einer Position bei etwa 10:00 bis 11:00 Uhr ein weiteres Stützrad 15 vorgesehen, während ein radförmiges Antriebselement 64 die Felge 12 bei etwa 2:00 Uhr abstützt.

Es ergibt sich, wie auch bei den zuvor beschriebenen Ausführungsbeispielen, eine 3-Punkt-Abstützung der Felge 12 über die Stützräder 15 beziehungsweise Führungselemente 65 und über das Antriebselement 64, wobei bevorzugt über den Umfang betrachtet eine gleichmäßig beabstandete Anordnung der Stütz- und Antriebselemente gegeben ist. Das radartige Antriebselement 64 ist im übertragenen Sinne ein antreibbares Stützrad 15.

Die Lenkgabel 62 ist starr mit dem Stützteil 8 verbunden, insbesondere, wie auch bevorzugt, im Bereich des Grundträgers 31 der Getriebeausformung 32 (siehe Befestigung 9).

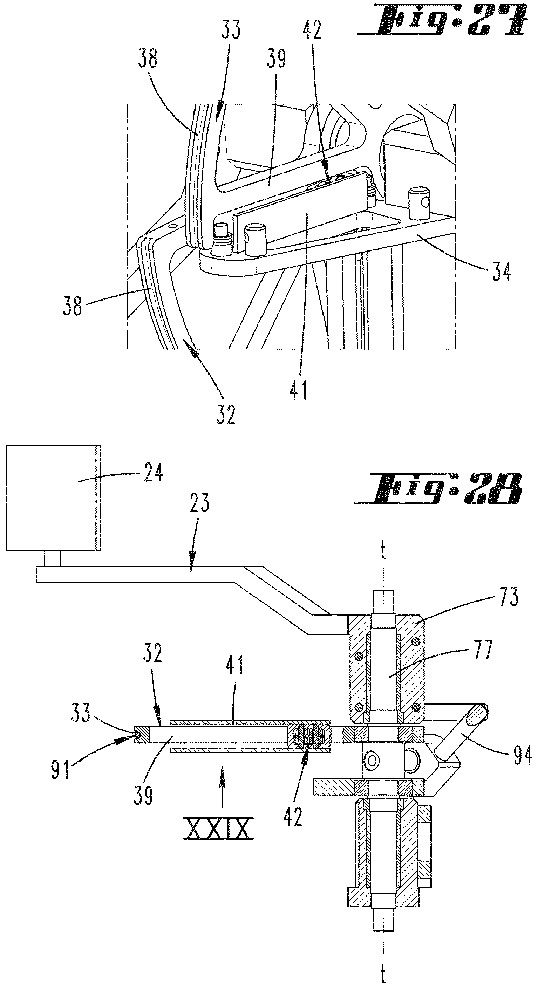

Wie weiter insbesondere aus den Darstellungen in den Figuren 24 bis 29 ersichtlich, wird auch hier der Antrieb über einen Seilzug 91 bevorzugt.

Das Tretpedal 24 ist auf einer Kreisbahn entlang eines bogenförmigen Verlagerungswegs W entsprechend der beispielsweise anhand der Figuren 14 bis 18 dargestellten Ausführungsform zwischen einer niedergedrückten Stellung und einer hochgeschwenkten Stellung verlagerbar, wobei weiter auch hier die Tretpedale 24 bevorzugt über eine Synchronwippe 94 synchronisiert sind.

Die Tretpedale 24 wirken jeweils mit einem Ausleger 34 auf ein sektorförmiges Seilzugteil 33, welches eine in einem Querschnitt kehlenartige Führungsfläche 38 für das Seil 89 aufweist. Diese Führungsfläche 38 verläuft mit Bezug auf die geometrische Tretkurbelachse t des Tretpedals 24 bogenförmig, sich weiter bevorzugt etwa über einen Bereich von 90 Grad erstreckend.

Die Seilzugteile 33 sind um dieselbe Tretkurbelachse t schwenkbar wie die Tretpedale 24.

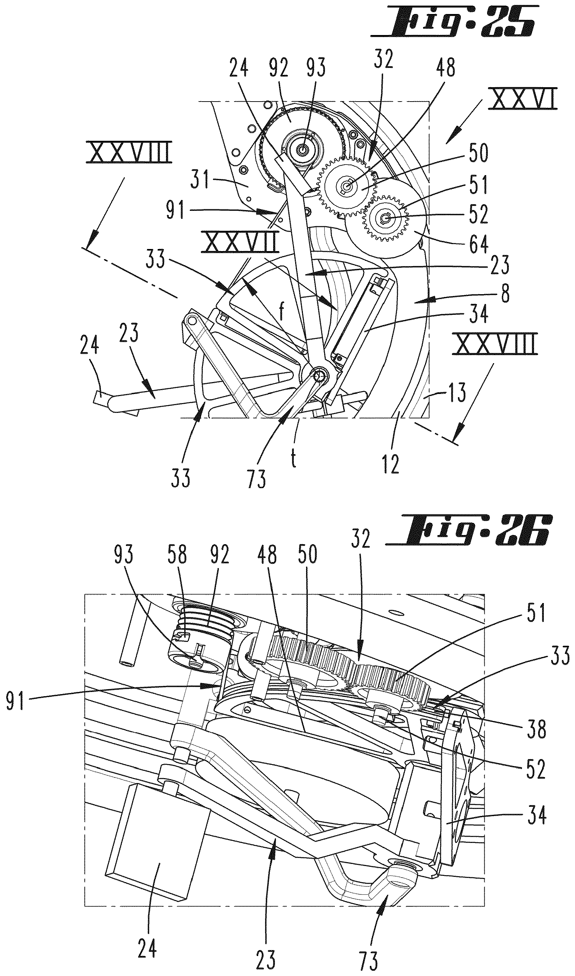

Der Radius f, entlang dessen sich die Führungsfläche 38 bogenförmig erstreckt, ist bevorzugt so angepasst, dass das durch die Führungsfläche 38 geführte Seil 89 mit einer im Wesentlichen entlang der Radebene R verlaufenden Seiltangente 89" in jeder Schwenkstellung des Seilzugteils 33 im Wesentlichen tangential in die, ein Teil der Getriebeausformung 32 bildende Seilwickelrolle 92 einläuft. Es ergibt sich dabei weiter bevorzugt ein stets gleicher Seilaustrittspunkt an der Wickelrolle 92. Dabei ist das Seil 89 bei einem niedergedrückten Tretpedal 24 über einen umfangsmäßig größeren Abschnitt in der Führungsfläche 38 aufgenommen als bei einem hochgeschwenkten Tretpedal 24. So kann weiter bei einem hochgeschwenkten Tretpedal 24 (wie beispielsweise aus Figur 25 ersichtlich) gegebenenfalls lediglich eine punktförmige Anlage des Seils 89 an der Führungsfläche 38 gegeben sein, während in der niedergedrückten Tretpedal-Stellung bevorzugt eine zumindest nahezu über die gesamte Erstreckungslänge der Führungsfläche 38 sich ergebende Anlage des Seils 89 gegeben sein kann.

Die Einwirkung des Tretpedals 24 über den Ausleger 34 auf das Seilzugteil 33 ist bevorzugt punktförmig beziehungsweise linienartig gegeben. Hierzu ist zunächst dem Ausleger 34 eine Strebe 39 des Seilzugteils 33 zugeordnet. Die Strebe 39 des Seilzugteils 33 kann insbesondere in einer Belastungsstellung durch das Tretpedal 24 in einer Parallelausrichtung zu dem Ausleger 34 verlaufen.

An dem radial zu der Tretkurbelachse t verlaufenden Ausleger 34 ist eine Linearführung 41 für ein Beaufschlagungsmittel 42 vorgesehen, welches dem Ausleger 34 zugeordnet ist.

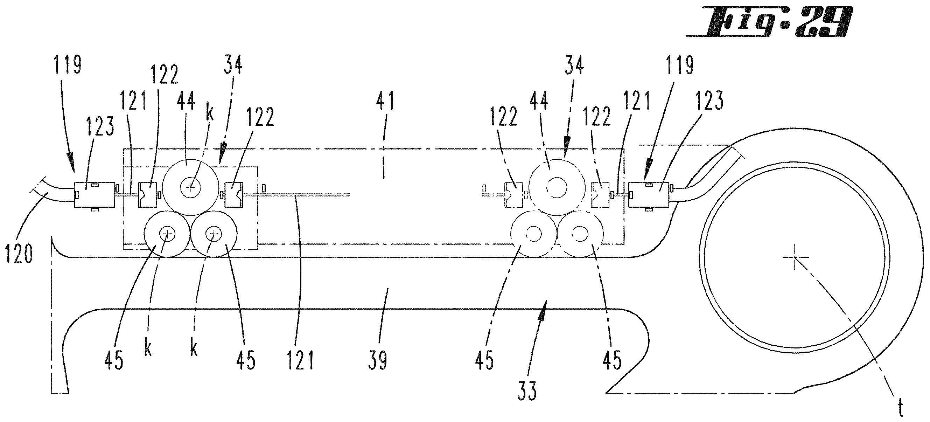

Das Beaufschlagungsmittel 42 weist dabei zunächst einen Laufwagen 43 auf, in welchem mit Bezug auf eine Querschnittdarstellung gemäß Figur 29 drei in einer Dreiecksanordnung vorgesehene Rollen 44 und 45 drehbar gehaltert sein können. Deren gleichgerichtete Drehachsen k verlaufen in Richtung der Tretkurbelachse t.

Der Laufwagen 43 ist in der Linearführung 41 linear, mit Bezug auf die Tretkurbelachse t in Radialrichtung, verlagerbar, wobei bei Belastung des Tretpedals 24 über den Ausleger 34 eine Einwirkung auf die Strebe 39 des Seilzugsteils 33 durch die paarweise Anordnung der Rollen 45 erreicht wird. Es ergeben sich dabei hinsichtlich der zugewandten Fläche der Strebe 39 linienartige Anlagen der Rollen 45 (vergleiche Figur 29).

Der Laufwagen 43 kann bevorzugt zusammen mit den Rollen 44 und 45 über einen Bowdenzug 119 entlang der Linearführung 41 in beiden Verlagerungsrichtungen verlagerbar sein. Dazu kann die Zugseele 121 des Bowdenzugs 119 an einem laufwagenseitigen Befestigungsbock 122 festgelegt sein, während sich das freie Ende des Zugmantels 120 an einem beispielsweise auslegerseitig vorgesehenen Abstützbock 123 abstützt.

Die in der Darstellung in Figur 29 gezeigten Bowdenzüge 119 können über den Laufwagen 43 endlos miteinander verbunden sein, zur gemeinsamen Verlagerung des Laufwagens 43 jeweils in eine Richtung.

Die Bedienung des Bowdenzugs 119 durch den Fahrer kann beispielweise über einen Schaltgriff im Bereich der Lenkausbildung 71 erfolgen.

Ist an dem Schaltgriff nur ein Mitnehmer vorgesehen, so ist bevorzugt nur ein Bowdenzug 119 durchlaufend vorgesehen. Bei einer Ausbildung des Schaltgriffs mit zwei Einhängepunkten für Zugseelen, sind bevorzugt zwei getrennte Bowdenzüge 119 vorgesehen, die jeweils an einem der beiden Enden des Laufwagens 43 angreifen.

Der Bowdenzug 119 zur Verstellung des Beaufschlagungspunktes über den Ausleger 34 auf das Seilzugteil 33 kann beispielsweise über einen drehbaren Schaltgriff oder einen Trigger-Schalthebel erfolgen, darüber hinaus alternativ aber auch beispielsweise über einen Schrittmotor, über welchen weiter alternativ ein automatisches Getriebe realisierbar ist.

Durch die bevorzugt manuell herbeizuführende Verschiebung der Kontaktpunkte zwischen dem Ausleger 34 des Tretpedals 24 und der Strebe 39 des Seilzugteils 33 ist eine Übersetzung änderbar (vergleiche strichpunktierte Position des Beaufschlagungsmittels 42 in Figur 29).

Die Anordnung von drei Rollen 44 und 45 erweist sich insbesondere auf die zu übertragenden Kräfte einerseits wie auch hinsichtlich der Verfahrkräfte bei einer Änderung der Übersetzung andererseits als günstig.

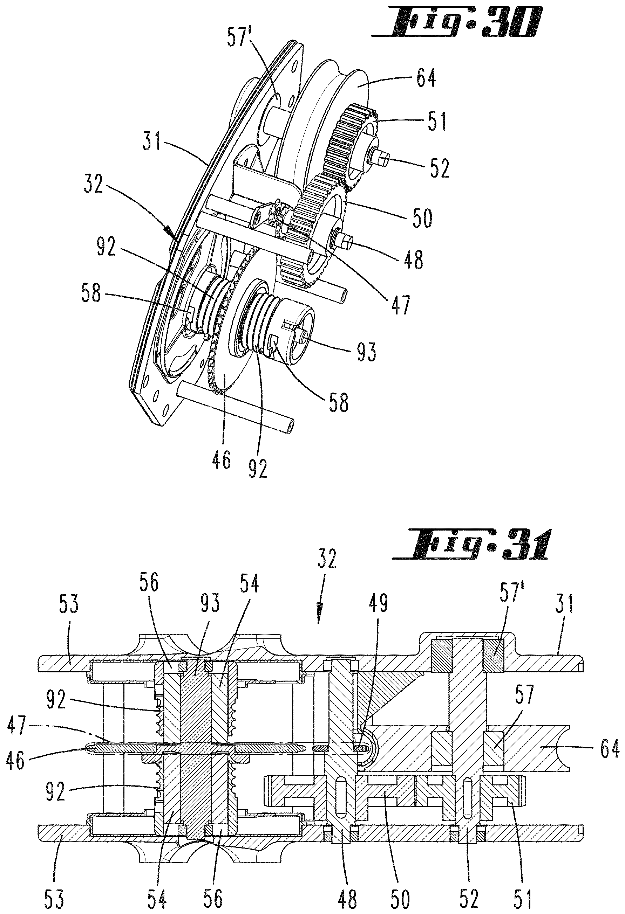

Die Figuren 30 und 31 zeigen die vorerwähnte Getriebeausformung 32. Wie ersichtlich, sind auf dem Grundträger 31 zwei Seilwickelrollen 92 um eine gemeinsame Achse 93 drehbar angeordnet, wobei weiter zwischen den beiden Seilwickelrollen 92 ein über diese antreibbares Kettenrad 46 vorgesehen ist.

Das Kettenrad 46 wirkt über eine Kette 47 auf ein drehfest auf einer Ritzelwelle 48 angeordnetes Ritzel 49. An dieser Ritzelwelle 48 ist weiter ein Zahnrad 50 drehfest gehaltert, welches mit einem Zahnrad 51 mit gegenüber dem Zahnrad 50 verringertem Durchmesser kämmt.

Das Zahnrad 51 ist wiederum drehfest auf einer Antriebswelle 52 gehaltert, über welche letztlich das auf die Felge 12 wirkende Antriebselement 64 antreibbar ist.

Der Grundträger 31 der Getriebeausformung 32 weist weiter zwei Gabelhalterplatten 53 auf, zwischen welchen die vorbeschriebenen Wellen und Achsen jeweils endseitig gelagert sind (vergleiche Figur 31).

In weiterer Ausgestaltung sind die Seilwickelrollen 92 unter Zwischenlage von Freilaufhülsen 54 auf der die Achse 93 bildenden Wickelrollenwelle gelagert. Dabei ist weiter bevorzugt jeder Seilwickelrolle 92 eine auf diese rückstellend einwirkende Triebfeder 56 zugeordnet.

Weiter bevorzugt ist auch das Antriebselement 64 über eine Freilaufhülse 57 auf der Antriebswelle 52 gelagert. Die Antriebswelle 52 findet seitens des Grundträgers 31 eine Lagerung in einer weiteren Freilaufhülse 57.

Zufolge der Anordnung der Freilaufhülsen ergeben sich insbesondere bei Fahrbewegungen des Fahrzeugs 1 ohne aktive Einwirkung über die Tretpedale 24 günstige Lastfälle. So zeigt Figur 32 in schematischer Darstellung die Situation bei einer Rollbewegung des Fahrzeugs 1 in üblicher Fahrtrichtung r, bei welcher zufolge der Freilaufhülse 57 das Antriebselement 64 frei um dessen Antriebswelle 52 drehen kann, ohne über die Zahnrad- und Kettenübertragung auf die Seilwickelrollen 92 einzuwirken. Weiter kann in einer solchen Belastungssituation die Antriebswelle 52 zusätzlich über die Freilaufhülse 57' an einer Drehung entgegen der üblichen Fahrtrichtung r gehindert sein.

Figur 33 hingegen zeigt eine Situation bei einer Rollbewegung des Fahrzeugs 1 in einer Fahrtrichtung r' entgegen der üblichen Fahrtrichtung r, auch hier ohne Einwirkung über die Tretpedale 24. Das Antriebselement 24 nimmt in dieser Drehrichtung über die Freilaufhülse 57 die Antriebswelle 52 und das Zahnrad 51 mit, sodass über das Zahnrad 50, die Ritzelwelle 48 und das Ritzel 49 zufolge Kettenübertragung auch das Kettenrad 46 mit der Achse 66 drehbewegt wird. Zufolge der (weiteren) Freilaufhülsen 54 der Seilwickelrollen 92 ist auch in dieser Rollsituation keine Dreheinwirkung auf die Seilwickelrollen 92 gegeben. Durch die gehäusefeste Freilaufhülse 57' ist die Antriebswelle 52 blockiert, womit keine Bewegung/ Drehung durch das Antriebselement 64 in das Getriebe beziehungsweise in die Wickelrollen 92 eingebracht wird.

In beiden vorbeschriebenen Lastfällen ist ohne willensbetonte Einwirkung über die Tretpedale 24 bevorzugt keine (unkontrollierte) Drehung der Seilwickelrollen 92 gegeben.

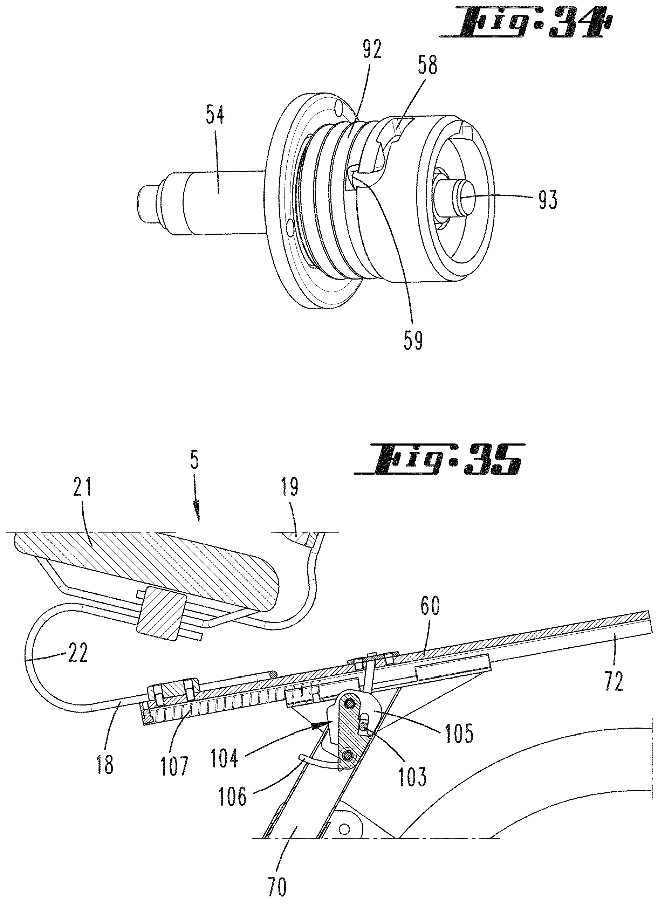

In Figur 34 ist eine Seilwickelrolle 92 in perspektivischer Einzeldarstellung gezeigt. Wie ersichtlich, ist diese wandungsaußenseitig mit einer schlitzförmigen Einführöffnung 58 für das zuordbarer Seilende versehen. Diese Einführöffnung 58 geht über in eine umfangsmäßig und axial versetzt ausgebildete Halterungsöffnung 59, durch welche das montierte Seil 89 nach radial außen austritt.

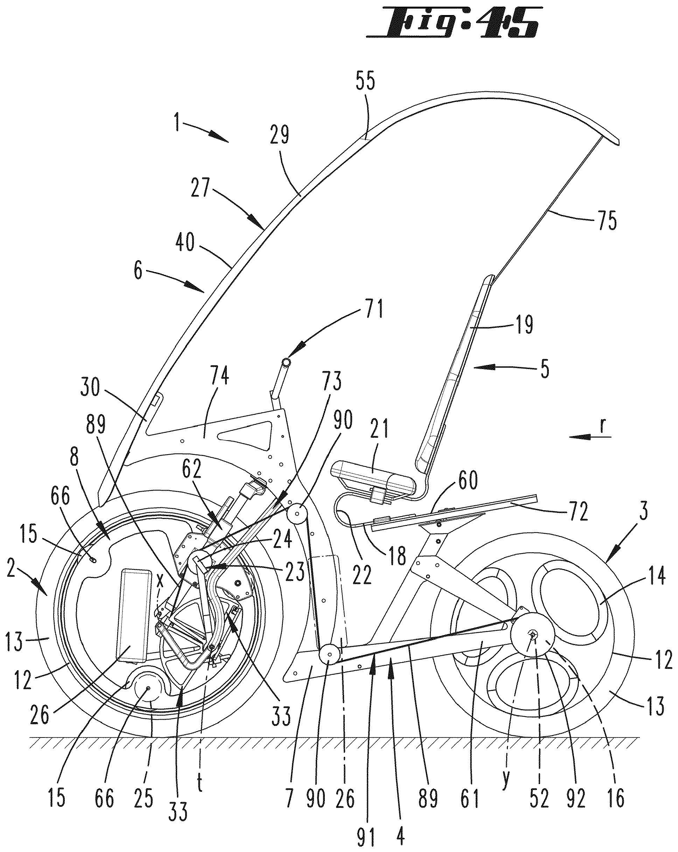

Figur 45 zeigt eine weiter Ausführungsform, mit einem auf das Hinterrad 3 wirkenden Seilzug-Antrieb.

Auch bei dieser alternativen Ausbildung sind die Fußaufnahmen 23, insbesondere die Tretpedale 24, wie vorbeschrieben, beidseitig des lenkbaren Vorderrads 2 angeordnet. Die Fußaufnahmen 23 können entsprechend auch auf kreisabschnittförmig gestaltete Seilzugteile 33 einwirken, über welch letztere wiederum das Seil 89 des Seilzugs 91 bei einem Niederdrücken des Tretpedals 24 betätigt oder bei einer Rückverlagerung des Tretpedals 24 entlastet wird.

Das Seil 89 ist über rahmenseitig vorgesehene Umlenkrollen 90 oder gegebenenfalls auch feststehende umlenkführungen, entlang des Grundträgers 7, insbesondere auch im Wesentlichen entlang der das Hinterrad 3 tragenden Gabel 61, zur Hinterradnabe 16 geführt. Diese Hinterradnabe 16 weist eine Antriebsachse 52 auf, auf welche mit zwei, bevorzugt jeweils einem Endbereich der Antriebsachse 52 zugeordnete Seilwickelrollen 92 eingewirkt werden kann. Bevorzugt kann wechselseitig auf die im Wesentlichen drehfest mit dem Hinterrad 3 verbundene oder mit dem Hinterrad 3 in Eingriff bringbare Antriebsachse 52 zum Antrieb des Hinterrades 3 eingewirkt werden.

Bezüglich einer möglichen Anordnung, Ausbildung und Wirkungsweise der Seilzüge 91 sowie der Seilwickelrollen 91, darüber hinaus auch bezüglich der Einwirkung der Seilwickelrollen 91 auf die Antriebsachse 52 des Hinterrades 3 wird auf den Offenbarungsgehalt der WO 2012/001436 A1 verwiesen.

Bevorzugt jeder Fußaufnahme 23 beziehungsweise jedem Tretpedal 24 ist auch in dieser Ausführungsform ein Seilzug 91 mit Umlenkrollen 90 und eine Seilwickelrolle 92 zugeordnet.

In bevorzugter Ausgestaltung ist der Seilzug 91 zumindest abschnittweise innerhalb des Rahmens 4, entsprechend teilweise versteckt, verlegt. Auch eine oder mehrere der Umlenkrollen 90 können in einer Verstecktlage oder in einer durch Rahmenabschnitte überdeckten Lage angeordnet sein.

Der Verlauf des Seils 90 sowie die Anordnung der Umlenkrollen 90 sind in der Darstellung in Figur 45 zur Verdeutlichung des Wirkprinzips vereinfacht dargestellt.

Die Seile 89 der auf das Hinterrad 3 wirkenden Seilzüge 91 können gemäß dieser Ausgestaltung mit ihren den Seilwickelrollen 92 abgewandten Enden an den zugeordneten Tretpedalen 24 beziehungsweise an den Kurbeln 79 der Tretpedale 24 befestigt sein. Die Seilbefestigung im Befestigungspunkt 124 kann unmittelbar an der jeweiligen Kurbel 79 gegeben sein, gegebenenfalls aber auch unter Zwischenschaltung eines Verstellelements.

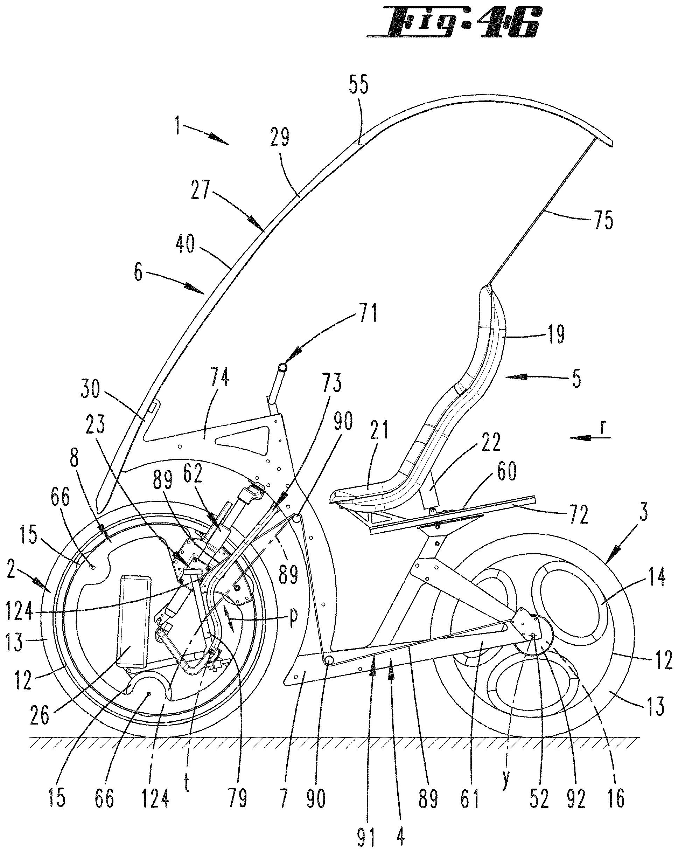

Ein solches mögliches Verstellelement kann beispielsweise schlittenartig an der Kurbel 79 verlagerbar gehaltert sein (siehe Doppelpfeil p), so dass entsprechend der Befestigungspunkt 124 des Seils 89 zur Übersetzungsänderung in verschiedene Abstandstellungen relativ zur Tretkurbelachse t verbracht werden kann (siehe strichpunktierter Verlauf des Seils 89 ausgehend von der Kurbel 79 in Figur 46). Eine solche Verstellmöglichkeit ist weiter beispielsweise auch in der Figur 17 gezeigt.

Zur bevorzugt linearen Verstellung des möglichen Verstellelements kann beispielsweise ein Bowdenzug vorgesehen sein, über welchen weiter beispielsweise fernbedienbar von der Lenkausbildung 71 auf die Übersetzung eingewirkt werden kann. Auch eine Verstellung über einen beispielsweise elektrischen Aktuator ist diesbezüglich möglich.

In weiterer Ausgestaltung können die Seilwickelrollen 92 zwischen den Schenkeln der das Hinterrad 3 tragenden Gabel 61 etwa in unmittelbarer Nebeneinanderlage angeordnet sein.

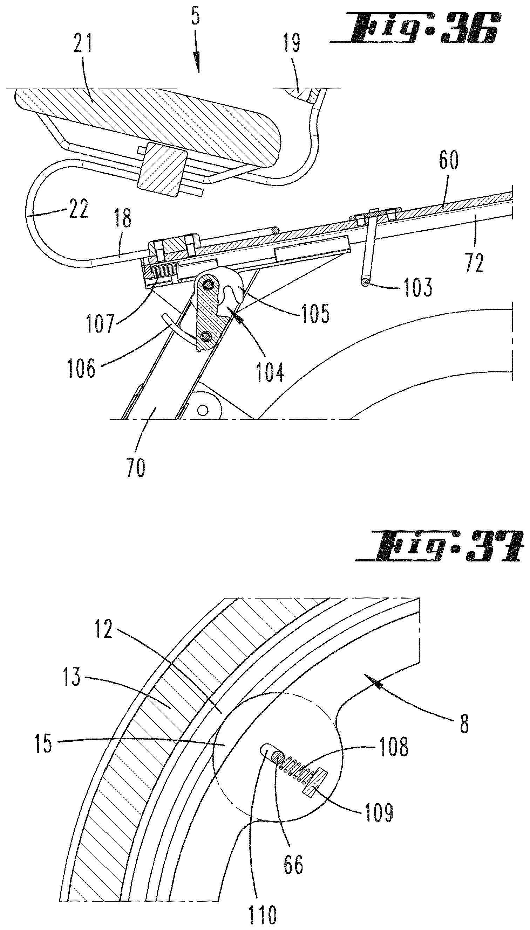

Die Figuren 35 und 36 zeigen eine weitere alternative Ausgestaltung hinsichtlich der Anordnung des Sitzteils 21 an dem Rahmen 4, insbesondere an der vorgesehenen Tragplatte 72.

Das Sitzteil 21 ist über die Sitzhalterung 18 im Wesentlichen in beziehungsweise entgegen der üblichen Fahrtrichtung r entlang der Tragplatte 72 schiebeverlagerbar, wozu die Sitzhalterung 18 auf einer Lagerplatte 60 befestigt sein kann.

An der Lagerplatte 60 kann ein bevorzugt nach unten abragender Schließbolzen 103 befestigt sein, welcher in der üblichen Nutzungsstellung des Sitzteils 21 gemäß Figur 35 verriegelnd mit einer Gabelfalle 105 eines Fallenschlosses 104 zusammenwirkt.

In dieser gesicherten Nutzungsstellung liegt der Schließbolzen 103 in der Gabelfalle 105 gefangen ein, sodass eine Schiebeverlagerung des Sitzteils 21 verhindert ist.

Entsprechend ist eine Schiebeverlagerung des Sitzteils 21 nach hinten, zur Einnahme einer Ein- oder Aussteigeposition, erst nach Aufhebung der vorbeschriebenen Verriegelung möglich. Hierzu kann ein Hebel 106 vorgesehen sein, der entsprechend auf die bevorzugt federvorgespannt in diese Stellung belastete Gabelfalle 105 einwirkt, derart, dass die Gabelfalle 105 um deren Drehachse in eine Stellung verschwenkt, in welcher der Schließbolzen 103 freigegeben ist. Hiernach ist das Sitzteil 21 in die rückverlagerte Stellung schiebeverlagerbar.

Diese Rückverlagerung kann unterstützt sein durch eine zwischen der Lagerplatte 60 und der Tragplatte 72 wirkende Feder 107. Entsprechend kann es sich beispielsweise um eine Zylinder-Zugfeder handeln. Alternativ kann die Feder 107 aber auch beispielsweise eine Zylinder-Druckfeder sein, die das Sitzteil 21 in Richtung auf die Nutzungsstellung vorspannt, sodass die Stellung gemäß Figur 36 nur temporär einnehmbar ist unter willensbetontem Halten des Sitzteils 21 in der zurückgezogenen Stellung. Nach Fortfall der entsprechenden Belastung verfährt das Sitzteil 21 selbsttätig zurück in die Nutzungsstellung, wobei weiter bevorzugt selbsttätig auch die Verriegelungsstellung eingenommen wird.

Um auch bei stärkeren Erschütterungen beziehungsweise Stoßeinwirkungen insbesondere auf das Vorderrad 2 den Kontakt zwischen einem Stützrad 15 und der Felge 12 nicht zu verlieren, kann das Stützrad 15 (entsprechend bevorzugt auch das Antriebselement 64) über einen radialen Federdruck gegen die Felge 12 wirken. So kann gemäß der Darstellung in Figur 37 im stützteilseitigen Halterungsbereich der diesbezüglichen Achse 66 eine Druckfeder 108 angeordnet sein, die mit Bezug zu der Vorderradachse x in radialer Richtung wirkend einerends sich an einem Abschnitt 109 des stützteilseitigen Halterungsbereiches abstützt und anderenends mittelbar oder unmittelbar auf die Achse 66 einwirkt, welche Achse 66 in dem Halterungsbereich in einem in Radialrichtung gerichteten Langloch 110 verlagerbar aufgenommen ist.

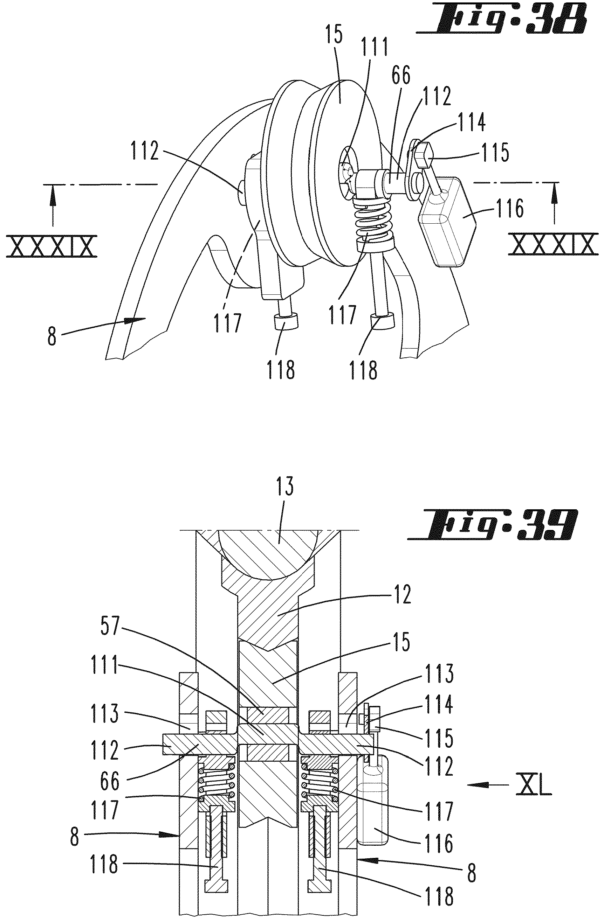

Die Figuren 38 bis 41 zeigen eine weitere mögliche Ausgestaltung zur Schaltung und/oder Regelung der Kontaktkraft insbesondere des Stützrades 15, gegebenenfalls aber auch des Antriebselements 64, zu der Felge 12. So soll für den Fall eines unbelasteten Rollens des Fahrzeugs 1, so beispielsweise bei einem Rückwärtsschieben des Fahrzeugs 1, ein auf das Stützrad 15 und/oder das per Muskelkraft beaufschlagbare Antriebselement 64 wirkender radialer Kraftspeicher ausgeschaltet oder reduziert werden, zur Reduzierung der Reibung zwischen dem Stützrad 15 und der Felge 12 bis hin zu einer vollständigen Kontaktaufhebung.

Die das Stützrad 15 tragende Achse 66 kann hierzu bezüglich ihrer Längserstreckung abgekröpft verlaufen, entsprechend eine Exzenterwelle bildend. Dabei kann der abgekröpfte Bereich 111 der Achse 66 mittig seiner Längserstreckung vorgesehen sein, in welchem abgekröpften Bereich 111, gegebenenfalls unter Zwischenschaltung einer Freilaufhülse 57, das Stützrad 15 gelagert ist.

Die beidseitig sich an diesen abgekröpften Bereich 111 anschließenden Achsabschnitte 112 können, wie auch bevorzugt, in im Wesentlichen radial zu der Vorderradachse x ausgerichteten Langlöchern 113 des Stützteils 8 gelagert sein.

Auf ein freies Ende der Achse 66 beziehungsweise eines Achsenabschnitts 112 wirkt über einen Exzenterhebel 114 ein elektromotorisch verstellbarer Aktor 115. Hierzu kann weiter an dem Stützteil 8 ein Stellmotor 116 mit einem selbsthemmenden Getriebe vorgesehen sein.

Auf die Achse 66, insbesondere auf die Achsabschnitte 112, wirken bevorzugt mit Bezug zu der Vorderradachse x im Wesentlichen in Radialrichtung Druckfedern 117. Deren Vorspannkraft kann über drehbare Stelleinrichtungen 118 variiert werden.

Rollt das Fahrzeug 1 ohne Muskelkraft-Antrieb in üblicher Fahrtrichtung r oder entgegen dieser Fahrtrichtung oder rollt das Fahrzeug 1 im Rekuperationsbetrieb, wird zufolge der vorbeschriebenen Anordnung erreicht, dass sich keine oder keine maßgebliche Reibung zwischen dem Stützrad 15 beziehungsweise dem Antriebselement 64 und der Felge 12 einstellt.

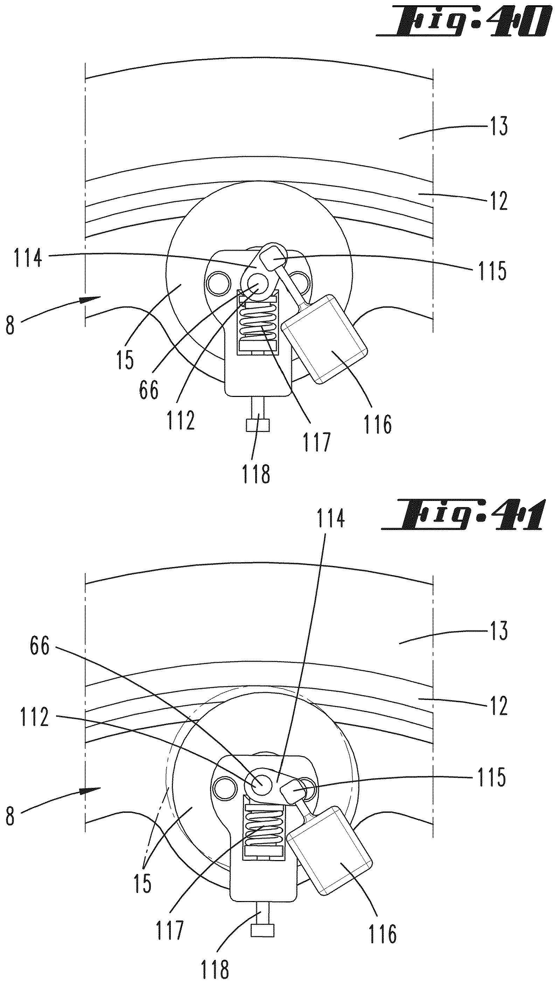

So kann mit Feststellung eines Rollens des Fahrzeugs 1 in üblicher Fahrtrichtung r oder bei Feststellung eines Rekuperationsbetriebs durch Bestromung des Stellmotors 116, beispielsweise über eine Dauer von 5 bis 15ms, weiter beispielsweise etwa 10ms, der Aktor 115 in eine Rückzugsstellung gemäß Figur 41 verlagert werden, wobei über den Exzenterhebel 114 die abgekröpfte Achse 66 um die geometrische Drehachse der Achsabschnitte 112 gedreht wird. Dabei wird die auf die Achse 66 wirkende Federkraft bevorzugt bis zu einer vollständigen Aufhebung reduziert, beispielsweise zufolge eines vollständigen Ausfederns oder zufolge Abstützung des der Achse zugewandten Federendes an einem stützteilseitigen Anschlag, und das Stützrad 15 beziehungsweise das Antriebselement 64 in eine durch die Feder 117 unbelastete Stellung verbracht, in welcher bevorzugt kein oder kein maßgeblicher Kontakt mehr zwischen dem Stützrad 15 und der Felge 12 stattfindet.

Diese Schaltung kann sowohl binär als auch geregelt ausgeführt werden, wobei bei einer Regelung ein Sensor die Kontaktkraft, beispielsweise im Bereich der Achse 66, misst und in Abhängigkeit von dem Messwert der Lastfall, beispielsweise über einen Schrittmotor, geregelt wird.

Bei dem Fall eines Rückwärtsrollens des Fahrzeugs 1 wird zunächst über das Vorderrad 2 das Stützrad 15 in diese Richtung mitgedreht, wobei durch die gegebene Sperrung der diesbezüglichen Freilaufhülse 57 die exzentrische Achse 66 aus der Stellung gemäß Figur 40 in Richtung auf eine Stellung gemäß Figur 41 gedreht wird. Diese Drehung kann über einen Microschalter erfasst werden, über welchen aktiv ein Zurückfahren des Aktors 115 durch den Stellmotor 116 erreicht wird. Auch hierdurch wird eine Stellung des Stützrades 15 erreicht, in welcher bevorzugt keine oder keine maßgebliche Reibung zwischen dem Stützrad und der Felge 12 gegeben ist. Auch hierbei kann der Federspeicher beispielsweise durch Hubanschlag ausgeschaltet sein.

Der Aktor 115 kann einen beispielhaften Hubweg von etwa 15 bis 25 mm, weiter etwa 20 mm aufweisen.

Bevorzugt wird der Stellmotor 116 des Aktors 115 nach einer Dauer stromlos geschaltet beziehungsweise sobald Reibung beziehungsweise Traktion benötigt wird wieder aktiviert, weiter beispielsweise durch einen Sensor, der die Seilkraft des Seilzugs 91 und/oder die Bewegung beziehungsweise die Bewegungskraft des oder der Tretpedale für den vorbeschriebenen Sektorantrieb erfasst.

Übertragungsleitungen können innerhalb des Längsträgers 7 in Richtung auf das starr am Rahmen 4 beziehungsweise am Längsträger 7 angeordnete Vorderrad 2 und zu dessen Vorderradnabe 15 geführt sein.

Ein der Fußaufnahme 23 beziehungsweise dem Tretpedal 24 zugeordnetes Witterungsschutzteil 36 ist weiter bevorzugt so ausgebildet, dass diese auch einen seitlichen Schutz von außen bieten kann. So weisen die beiden Witterungsschutzteile 36 jeweils außen eine im üblichen Fahrbetrieb des Fahrzeuges 1 aufwärts gerichtet verlaufende Wandung 36' auf, die jedoch unter Berücksichtigung der Anordnung der Tretpedale 24 ein Herausbewegen des auf dem Tretpedal befindlichen Fußes nach seitlich außen zulässt.

Die Schräglage des Fahrzeuges, d.h. die mögliche Neigung des Fahrzeuges 1, ist beim Durchfahren einer Kurve durch die Tretpedale 24, insbesondere deren Bewegungskreis, darüber hinaus insbesondere durch das die Tretpedale 24 insbesondere nach außen und nach unten überdeckende Witterungsschutzteil 36 begrenzt. Es kann sich ein Schräglagenwinkel von etwa 45 bis 50 Grad zu einer Vertikalen ergeben.

Auf der Gepäckaufnahme 101 kann ein weiterer Behälter zur Anbietung eines weiteren Stauraumes befestigt sein. Auch kann der Behälter nach hinten über das Hinterrad 3 hinaus überragen, wobei weiter ein Stützrad für den Behälter vorgesehen sein kann, das, gegebenenfalls über einen Teilumfang desselben, einen Behälterboden durchsetzen kann.

Ein Fahrzeug, das dadurch gekennzeichnet ist, dass ein Stützrad 15 radial verstellbar vorgesehen ist.

Ein Fahrzeug, das dadurch gekennzeichnet ist, dass das Stützrad 15 motorisch verstellbar ist.

Ein Fahrzeug, das dadurch gekennzeichnet ist, dass zur motorischen Verstellbarkeit ein Aktor 115 vorgesehen ist, der auf eine das Stützrad 15 durchsetzende Achse 66 einwirkt, wobei die Achse 66 abgekröpft verläuft.

Ein Fahrzeug, das dadurch gekennzeichnet ist, dass eine geometrische Vorderradachse x, die sich im Nutzungszustand im Wesentlichen horizontal erstreckt, abhängig von der Lenkstellung mit einer durch zwei Verlagerungswege W von zwei bezüglich des Vorderrades 2 gegenüberliegenden Tretpedalen 24 gegebenen Ebene F oder einer hierdurch gegebenen gekrümmten Fläche F unterschiedliche Schnittwinkel γ einnimmt.

Ein Fahrzeug, das dadurch gekennzeichnet ist, dass das Vorderrad 2 als nabenloses Rad ausgebildet ist, mit einem auf das Rad einwirkenden Antriebselement 64.

Ein Fahrzeug, das dadurch gekennzeichnet ist, dass das Tretpedal 24 linear oder auf einer Kreisbahn bewegbar ist.

Ein Fahrzeug, das dadurch gekennzeichnet ist, dass das Tretpedal 24 auf eine relativ zu dem Vorderrad 2 feststehende Übertragungswelle 77 wirkt und dass die Übertragungswelle 77 mit einer in der Lenkachse z des Vorderrades 2 verlaufenden Abtriebswelle 78 getriebemäßig zusammenwirkt.

Ein Fahrzeug, das dadurch gekennzeichnet ist, dass die Übertragungswelle 77 versetzt zu einer geometrischen Drehachse x des Vorderrads 2 verläuft.

Ein Fahrzeug, das dadurch gekennzeichnet ist, dass die Abtriebswelle 78 getriebemäßig mit dem Antriebselement 64 zusammenwirkt.

Ein Fahrzeug, das dadurch gekennzeichnet ist, dass im Innern des Rades ein feststehendes Halterungsteil 63 ausgebildet ist, relativ zu welchem das Rad umläuft.

Ein Fahrzeug, das dadurch gekennzeichnet ist, dass das Halterungsteil 63 mit dem von dem Benutzer zu bedienenden Lenker 71 verbunden ist.

Ein Fahrzeug, das dadurch gekennzeichnet ist, dass bei einer linearen Bewegung des Tretpedals 24 die Pedalkraft auf eine axial feststehende Spindel 81 übertragbar ist, von der über eine getriebemäßigen Kopplung die Kraft auf die Abtriebswelle 78 übertragbar ist.

Ein Fahrzeug, das dadurch gekennzeichnet ist, dass die Pedalbewegung mittels eines ein Seil 82 und Umlenkrollen 90 aufweisenden Seilzugs 91 auf das Antriebselement 64 übertragbar ist.

Ein Fahrzeug, das dadurch gekennzeichnet ist, dass ein Abschnitt des Seilzugs 91 sich im Wesentlichen entlang der geometrischen Drehachse x des Vorderrades 2 und/oder entlang der Lenkachse z erstreckt.

Ein Fahrzeug, das dadurch gekennzeichnet ist, dass das Tretpedal 24 auf einer Kreisbahn bewegbar ist und mit einem zumindest sektorförmigen Seilzugteil 33 verbunden ist, das eine Führungsfläche 38 für das Seil 82 bildet, wobei die Führungsfläche 38 mit Bezug auf eine geometrische Tretkurbelachse t des Tretpedals 24 bogenförmig verläuft, wobei weiter das Seil 82 bei einem niedergedrückten Tretpedal 24 über einen größeren Abschnitt in der Führungsfläche 38 aufgenommen ist als bei einem hochgeschwenkten Tretpedal 24.

Ein Fahrzeug, das dadurch gekennzeichnet ist, dass das Seilzugteil 33 um dieselbe Achse t wie das Tretpedal 24 verschwenkbar ist.

Ein Fahrzeug, das dadurch gekennzeichnet ist, dass mit dem Tretpedal 24 auf das Seilzugteil 33 punktartig einwirkbar ist.

Ein Fahrzeug, das dadurch gekennzeichnet ist, dass ein Einwirkungspunkt des Tretpedals 24 auf das Seilzugteil 33 in Bezug auf die Achse t radial verstellbar ist.

Ein Fahrzeug, das dadurch gekennzeichnet ist, dass zusätzlich zu dem durch aufgebrachte Muskelkraft angetriebenen Antriebselement 64 ein oder mehrere Antriebselemente 64 über fest in dem Vorderrad 2 angeordnete Elektromotoren 25 angetrieben sind.

Ein Fahrzeug, das dadurch gekennzeichnet ist, dass die Antriebselemente 64 mit dem feststehenden Teil des Vorderrades 2 verbunden sind.

Ein Fahrzeug, das dadurch gekennzeichnet ist, dass die Lenkachse z mit einer Vertikalen V einen spitzen Winkel α von mehr als 15 Grad einschließt und dass eine Höhenverstellung des Sitzteils 21 parallel oder annähernd parallel zu der Lenkachse z ermöglicht ist.

Ein Fahrzeug, das dadurch gekennzeichnet ist, dass das Sitzteil 21 aus einer Nutzungsposition in eine Ein- oder Aussteigposition in Richtung auf das Hinterrad 3 verschiebbar ist, wobei die verschobene Position verrastbar ist.

Ein Fahrzeug, das dadurch gekennzeichnet ist, dass das Sitzteil 21 mittels einer Feder 107 in seine Nutzungsstellung vorgespannt ist.

Ein Fahrzeug, das dadurch gekennzeichnet ist, dass das Sitzteil 21 in der Nutzungsstellung mittels eines Fallenschlosses 104 verriegelbar ist.

**Liste der Bezugszeichen**

| | | | |
|---|---|---|---|
| 1 | Fahrzeug | 29 | Rahmenteil |
| 2 | Vorderrad | 30 | Querträger |
| 3 | Hinterrad | 31 | Grundträger |
| 4 | Rahmen | 32 | Getriebeausformung |
| 5 | Sitzausformung | 33 | Seilzugteil |
| 6 | Witterungsschutz | 34 | Ausleger |
| 7 | Grundträger | 35 | Abdeckung |
| 8 | Stützteil | 36 | Witterungsschutzteil |
| 9 | Befestigung | 36' | Wandung |
| 10 | Lenkzapfen | 37 | Bedienelement |
| 11 | Aufnahme | 38 | Führungsfläche |
| 12 | Felge | 39 | Strebe |
| 13 | Bereifung | 40 | Abschnitt |
| 14 | Stützelement | 41 | Linearführung |
| 15 | Stützrad | 42 | Beaufschlagungsmittel |
| 16 | Hinterradnabe | 43 | Laufwagen |
| 17 | Abdeckung | 44 | Rolle |
| 18 | Sitzhalterung | 45 | Rolle |
| 19 | Rückenteil | 46 | Kettenrad |
| 20 | Kopfstütze | 47 | Kette |
| 21 | Sitzteil | 48 | Ritzelwelle |
| 22 | Feder | 49 | Ritzel |
| 23 | Fußaufnahme | 50 | Zahnrad |
| 24 | Tretpedal | 51 | Zahnrad |
| 25 | Elektromotor | 52 | Antriebswelle |
| 26 | Akkumulator | 53 | Gabelhalterplatte |
| 27 | Rahmenkonstruktion | 54 | Freilaufhülse |
| 28 | Rahmenteil | 55 | flexibler Bereich |
| 56 | Triebfeder | 85 | Schneckenwelle |
| 57 | Freilaufhülse | 86 | Schneckenrad |
| 57' | Freilaufhülse | 87 | Nabenschaltung |
| 58 | Einführöffnung | 88 | Achse |
| 59 | Halterungsöffnung | 89 | Seil |
| 60 | Lagerplatte | 89' | Seiltangente |
| 61 | Gabel | 89" | Seiltangente |
| 62 | Lenkgabel | 90 | Umlenkrolle |
| 63 | Halterungsteil | 90' | Umlenkrolle |
| 64 | Antriebselement | 90" | Umlenkrolle |
| 65 | Führungselement | 91 | Seilzug |
| 66 | Achse | 92 | Seilwickelrolle |
| 67 | Nut | 93 | Achse |
| 68 | Antriebssteg | 94 | Wippe |
| 69 | Halterungsprofil | 95 | Dachabschnitt |
| 70 | Rohraufnahme | 96 | Bügel |
| 71 | Lenkausbildung | 97 | Bodenanker |
| 72 | Tragplatte | 98 | Schlitz |
| 73 | Gestell | 99 | Hebel |
| 74 | Träger | 100 | Verbindung |
| 75 | Spannseil | 101 | Gepäckaufnahme |
| 76 | Lenkstange | 102 | Abdeckung |
| 77 | Übertragungswelle | 103 | Schließbolzen |
| 78 | Abtriebswelle | 104 | Fallenschloss |
| 79 | Kurbel | 105 | Gabelfalle |
| 80 | Führungsstange | 106 | Hebel |
| 81 | Spindel | 107 | Feder |
| 82 | Schraubmutter | 108 | Druckfeder |
| 83 | Übertragungsmittel | 109 | Abschnitt |
| 84 | Getriebestufe | 110 | Langloch |
| 111 | abgekröpfter Bereich | r | Fahrtrichtung |
| 112 | Achsabschnitt | r' | Fahrtrichtung |
| 113 | Langloch | s | Pfeil |
| 114 | Exzenterhebel | t | Tretkurbelachse |
| 115 | Aktor | u | Achse |
| 116 | Stellmotor | v | Lenkerachse |
| 117 | Druckfeder | x | Vorderradachse |
| 118 | Stelleinrichtung | y | Hinterradachse |
| 119 | Bowdenzug | z | Lenkachse |
| 120 | Zugmantel | | |
| 121 | Zugseele | | |
| 122 | Befestigungsbock | E | Längsmittelebene |
| 123 | Abstützbock | F | Fläche |
| 124 | Befestigungspunkt | K | Verlagerungsebene |
| | | L | Längsrichtung |
| | | R | Ebene |
| a | Abstand | V | Vertikale |
| b | Länge | W | Verlagerungsweg |
| c | Breite | | |
| d | Durchmesser | | |
| d' | Durchmesser | α | Winkel |
| e | Versatzmaß | β | Winkel |
| f | Radius | γ | Winkel |
| g | Breite | δ | Winkel |
| h | Fahrzeughöhe | ε | Winkel |
| k | Achse | | |
| P | Pfeil | | |

## Patentansprüche

1. Fahrradartiges Fahrzeug (1), das jedenfalls auch durch Muskelkraft eines Benutzers antreibbar ist, mit einem Lenker (71), einem Sitzteil (21), einem Vorderrad (2) und einem Hinterrad (3), wobei das Vorderrad (2) lenkbar ist und der Antrieb durch Muskelkraft mittelbar oder unmittelbar das Vorderrad (2) und/oder das Hinterrad (3) antreibt, wobei die Muskelkraft über auf einem Verlagerungsweg (W) verlagerbare Tretpedale (24) aufzubringen ist, wobei die Tretpedale (24) sich in seitlicher Überdeckung zu dem Vorderrad (2) befinden, wobei mit Bezug auf eine senkrechte Projektion der Ebenen des lenkbaren Vorderrades und der Tretpedale auf eine Abrollebene, auf welcher sich das Fahrzeug bewegen kann, eine sich in geradliniger Fahrtrichtung ausgerichtete parallele Anordnung der Verlagerungsweg-Ebenen ergibt, wobei die Ebenen quer zur Ebenenausrichtung zueinander beabstandet sind und wobei die Ebene des Vorderrades sich zwischen diesen Verlagerungsweg-Ebenen erstreckt, bei einem Geradeauslauf etwa mittig zwischen den Verlagerungsweg-Ebenen und gleichgerichtet ausgerichtet zu dieser, **dadurch gekennzeichnet , dass** der Verlagerungsweg (W) der Tretpedale (24) unabhängig von einer Lenkstellung des Vorderrads (2) ist, sodass eine Ebene (R), in der sich das Vorderrad (2) erstreckt, abhängig von der Lenkstellung unterschiedlich zu dem Verlagerungsweg (W) verläuft, und bei einer von dem Geradeauslauf abweichenden Lenkstellung die Ebene des Vorderrades einen spitzen Winkel zu den Verlagerungsweg-Ebenen einnimmt.

2. Fahrzeug nach Anspruch 1, **dadurch gekennzeichnet, dass** ein gabelfester Bügel (96) vorgesehen ist, der das Vorderrad (2) vorderseitig umgreift und nur zerstörend lösbar mit der Gabel (62) verbunden ist, wobei der Bügel (96) eine verriegelbare Öffnung aufweist, zur Sicherung des Fahrzeugs (1) beispielsweise an einem Bodenanker (97).

3. Fahrzeug nach einem der vorhergehenden Ansprüche, **dadurch gekennzeichnet, dass** das Vorderrad (2) als nabenloses Rad ausgebildet ist, mit einem auf das Rad einwirkenden Antriebselement (64).

4. Fahrzeug nach einem der vorhergehenden Ansprüche, **dadurch gekennzeichnet, dass** das Tretpedal (24) linear oder auf einer Kreisbahn bewegbar ist.

5. Fahrzeug nach einem der vorhergehenden Ansprüche, **dadurch gekennzeichnet, dass** das Tretpedal (24) auf eine relativ zu dem Vorderrad (2) feststehende Übertragungswelle (77) wirkt und dass die Übertragungswelle (77) mit einer in der Lenkachse (z) des Vorderrades (2) verlaufenden Abtriebswelle (78) getriebemäßig zusammenwirkt.

6. Fahrzeug nach Anspruch 5, **dadurch gekennzeichnet, dass** die Übertragungswelle (77) versetzt zu einer geometrischen Drehachse (x) des Vorderrads (2) verläuft.

7. Fahrzeug nach einem der Ansprüche 5 oder 6, **dadurch gekennzeichnet, dass** die Abtriebswelle (78) getriebemäßig mit dem Antriebselement (64) zusammenwirkt.

8. Fahrzeug nach einem der vorhergehenden Ansprüche, **dadurch gekennzeichnet, dass** im Innern des Rades ein feststehendes Halterungsteil (63) ausgebildet ist, relativ zu welchem das Rad umläuft.

9. Fahrzeug nach Anspruch 8, **dadurch gekennzeichnet, dass** das Halterungsteil (63) mit dem von dem Benutzer zu bedienenden Lenker (71) verbunden ist.

10. Fahrzeug nach einem der vorhergehenden Ansprüche, **dadurch gekennzeichnet, dass** bei einer linearen Bewegung des Tretpedals (24) die Pedalkraft auf eine axial feststehende Spindel (81) übertragbar ist, von der über eine getriebemäßigen Kopplung die Kraft auf die Abtriebswelle (78) übertragbar ist.

11. Fahrzeug nach einem der vorhergehenden Ansprüche, **dadurch gekennzeichnet, dass** zusätzlich zu dem durch aufgebrachte Muskelkraft angetriebenen Antriebselement (64) ein oder mehrere Antriebselemente (64) über fest in dem Vorderrad (2) angeordnete Elektromotoren (25) angetrieben sind, wobei, bevorzugt, die Antriebselemente (64) mit dem feststehenden Teil des Vorderrades (2) verbunden sind.

12. Fahrzeug nach einem der vorhergehenden Ansprüche, **dadurch gekennzeichnet, dass** die Lenkachse (z) mit einer Vertikalen (V) einen spitzen Winkel (α) von mehr als 15 Grad einschließt und dass eine Höhenverstellung eines Sitzteils (21) parallel oder annähernd parallel zu der Lenkachse (z) ermöglicht ist.

13. Fahrzeug nach Anspruch 12, **dadurch gekennzeichnet, dass** das Sitzteil (21) aus einer Nutzungsposition in eine Ein- oder Aussteigposition in Richtung auf das Hinterrad (3) verschiebbar ist, wobei die verschobene Position verrastbar ist.

14. Fahrzeug nach einem der Ansprüche 12 oder 13, **dadurch gekennzeichnet, dass** das Sitzteil (21) mittels einer Feder (107) in seine Nutzungsstellung vorgespannt ist.

15. Fahrzeug nach einem der Ansprüche 13 oder 14, **dadurch gekennzeichnet, dass** das Sitzteil (21) in der Nutzungsstellung mittels eines Fallenschlosses (104) verriegelbar ist.

## Claims

1. A bicycle-like vehicle (1) that can in any case also be powered by a user's muscle power, comprising handlebars (71), a seat (21), a front wheel (2), and a rear wheel (3), wherein the front wheel (2) is steerable and the muscle-powered drive directly or indirectly drives the front wheel (2) and/or the rear wheel (3), wherein the muscle power is applied via pedals (24) that can be moved along a displacement path (W), wherein the pedals (24) are located in lateral overlap with the front wheel (2), wherein, with reference to a perpendicular projection of the planes of the steerable front wheel and the pedals onto a rolling plane on which the vehicle can move, a parallel arrangement of the displacement path planes aligned in the straight-line direction of travel results, wherein the planes are spaced apart from one another transversely to their alignment, and wherein the plane of the front wheel extends between these displacement path planes, approximately midway between the displacement path planes when traveling straight ahead and aligned in the same direction as them, **characterized in that** the displacement path (W) of the pedals (24) is independent of the steering position of the front wheel (2), such that a plane (R) in which the front wheel (2) extends runs differently relative to the displacement path (W) depending on the steering position, and in a steering position deviating from the straight-line travel, the plane of the front wheel forms an acute angle with the displacement path planes.

2. Vehicle according to claim 1, **characterized in that** a fork-fixed bracket (96) is provided, which encircles the front wheel (2) from the front and is connected to the fork (62) in a manner that can only be separated by destruction, wherein the bracket (96) has a lockable opening for securing the vehicle (1), for example, to a ground anchor (97).

3. Vehicle according to one of the preceding claims, **characterized in that** the front wheel (2) is designed as a hubless wheel, with a drive element (64) acting on the wheel.

4. Vehicle according to any of the preceding claims, **characterized in that** the pedal (24) is movable linearly or along a circular path.

5. Vehicle according to any of the preceding claims, **characterized in that** the pedal (24) acts on a drive shaft (77) fixed relative to the front wheel (2) and that the drive shaft (77) meshes with an output shaft (78) extending along the steering axis (z) of the front wheel (2).

6. Vehicle according to claim 5, **characterized in that** the transmission shaft (77) extends offset from a geometric axis of rotation (x) of the front wheel (2).

7. Vehicle according to any one of claims 5 or 6, **characterized in that** the output shaft (78) meshes with the drive element (64).

8. Vehicle according to any one of the preceding claims, **characterized in that** a fixed mounting part (63) is formed inside the wheel, relative to which the wheel rotates.

9. Vehicle according to claim 8, **characterized in that** the mounting part (63) is connected to the handlebars (71) to be operated by the user.

10. Vehicle according to any of the preceding claims, **characterized in that**, during linear movement of the pedal (24), the pedal force is transmissible to an axially fixed spindle (81), from which the force is transmissible to the output shaft (78) via a gear-type coupling.

11. Vehicle according to any of the preceding claims, **characterized in that**, in addition to the drive element (64) driven by applied muscle force, one or more drive elements (64) are driven by electric motors (25) fixedly arranged in the front wheel (2), wherein, preferably, the drive elements (64) are connected to the stationary part of the front wheel (2).

12. Vehicle according to any of the preceding claims, **characterized in that** the steering axis (z) forms an acute angle (α) of more than 15 degrees with a vertical line (V), and **in that** a seat section (21) can be adjusted in height parallel or approximately parallel to the steering axis (z).

13. Vehicle according to claim 12, **characterized in that** the seat portion (21) is slidable from a use position to an entry or exit position toward the rear wheel (3), wherein the displaced position can be locked in place.

14. Vehicle according to any one of claims 12 or 13, **characterized in that** the seat portion (21) is biased into its operating position by a spring (107).

15. Vehicle according to any one of claims 13 or 14, **characterized in that** the seat portion (21) is lockable in the operating position by means of a latch (104).

## Revendications

1. Véhicule de type vélo (1), pouvant en tout état de cause être entrainé par la force musculaire d'un utilisateur, comprenant un guidon (71), un siège (21), une roue avant (2) et une roue arrière (3), la roue avant (2) étant orientable et l'entraînement par la force musculaire entraînant directement ou indirectement la roue avant (2) et/ou la roue arrière (3), la force musculaire devant être appliquée par l'intermédiaire de pédales (24) pouvant se déplacer le long d'une course (W), les pédales (24) se trouvant en chevauchement latéral par rapport à la roue avant (2), ce qui, par rapport à une projection perpendiculaire des plans de la roue avant orientable et des pédales sur un plan de roulement sur lequel le véhicule peut se déplacer, donne lieu à une disposition parallèle des plans de la course de déplacement, orientée dans la direction de déplacement rectiligne, les plans étant espacés les uns des autres transversalement à leur orientation, et le plan de la roue avant s'étendant entre ces plans de course de déplacement, à peu près au milieu entre les plans de course de déplacement en ligne droite et orienté dans la même direction que ceux-ci, **caractérisé en ce que** la course de déplacement (W) des pédales (24) est indépendant de la position de braquage de la roue avant (2), de sorte qu'un plan (R) dans lequel s'étend la roue avant (2) s'étend différemment par rapport à la course de déplacement (W) en fonction de la position de braquage, et que, dans une position de braquage s'écartant de la position de marche en ligne droite, le plan de la roue avant forme un angle aigu avec les plans de course de déplacement.

2. Véhicule selon la revendication 1, **caractérisé en ce qu'**il est prévu un étrier (96) solidaire de la fourche, qui entoure la roue avant (2) par l'avant et n'est relié à la fourche (62) que de manière irréversible, l'étrier (96) présentant une ouverture verrouillable destinée à immobiliser le véhicule (1), par exemple à un ancrage au sol (97).

3. Véhicule selon l'une des revendications précédentes, **caractérisé en ce que** la roue avant (2) est conçue comme une roue sans moyeu, avec un élément d'entraînement (64) agissant sur la roue.

4. Véhicule selon l'une des revendications précédentes, **caractérisé en ce que** la pédale (24) est mobile de manière linéaire ou selon une trajectoire circulaire.

5. Véhicule selon l'une des revendications précédentes, **caractérisé en ce que** la pédale (24) agit sur un arbre de transmission (77) fixe par rapport à la roue avant (2) et **en ce que** l'arbre de transmission (77) coopère par engrènement avec un arbre de sortie (78) s'étendant dans l'axe de direction (z) de la roue avant (2).

6. Véhicule selon la revendication 5, **caractérisé en ce que** l'arbre de transmission (77) s'étend de manière décalée par rapport à un axe de rotation géométrique (x) de la roue avant (2).

7. Véhicule selon l'une des revendications 5 ou 6, **caractérisé en ce que** l'arbre de sortie (78) coopère par engrènement avec l'élément d'entraînement (64).

8. Véhicule selon l'une des revendications précédentes, **caractérisé en ce qu'**une pièce de support fixe (63) est formée à l'intérieur de la roue, par rapport à laquelle la roue tourne.

9. Véhicule selon la revendication 8, **caractérisé en ce que** la pièce de support (63) est reliée au guidon (71) destiné à être actionné par l'utilisateur.

10. Véhicule selon l'une des revendications précédentes, **caractérisé en ce que**, lors d'un mouvement linéaire de la pédale (24), la force exercée sur la pédale peut être transmise à un axe (81) fixe dans le sens axial, à partir duquel la force peut être transmise à l'arbre de sortie (78) par l'intermédiaire d'un couplage de type transmission.

11. Véhicule selon l'une des revendications précédentes, **caractérisé en ce que**, en plus de l'élément d'entraînement (64) actionné par la force musculaire appliquée, un ou plusieurs éléments d'entraînement (64) sont entraînés par des moteurs électriques (25) disposés de manière fixe dans la roue avant (2), les éléments d'entraînement (64) étant de préférence reliés à la partie fixe de la roue avant (2).

12. Véhicule selon l'une des revendications précédentes, **caractérisé en ce que** l'axe de direction (z) forme avec une verticale (V) un angle aigu (α) supérieur à 15 degrés et **en ce qu'**un réglage en hauteur d'un siège (21) est possible parallèlement ou approximativement parallèlement à l'axe de direction (z).

13. Véhicule selon la revendication 12, **caractérisé en ce que** l'assise (21) peut être déplacée d'une position d'utilisation vers une position d'entrée ou de sortie en direction de la roue arrière (3), la position déplacée pouvant être verrouillée.

14. Véhicule selon l'une des revendications 12 ou 13, **caractérisé en ce que** l'assise (21) est précontrainte dans sa position d'utilisation au moyen d'un ressort (107).

15. Véhicule selon l'une des revendications 13 ou 14, **caractérisé en ce que** l'assise (21) peut être verrouillée en position d'utilisation au moyen d'un loquet (104).
